Europäisches Patentamt

European Patent Office

Office européen des brevets

(19)

(11) **EP 1 545 082 A2**

(12) **EUROPEAN PATENT APPLICATION**

(43) Date of publication:
**22.06.2005 Bulletin 2005/25**

(51) Int Cl.⁷: **H04L 25/03**, H04L 1/06,
H04B 7/08

(21) Application number: **04255335.4**

(22) Date of filing: **02.09.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **17.12.2003 GB 0329230
28.07.2004 GB 0416821**

(71) Applicant: **Kabushiki Kaisha Toshiba
Tokyo 105-8001 (JP)**

(72) Inventor: **Yee, Mong Suan
Bristol BS1 4ND (GB)**

(74) Representative: **Midgley, Jonathan Lee
Marks & Clerk
90 Long Acre
London WC2E 9RA (GB)**

(54) **Signal decoding methods and apparatus**

(57)     This invention is generally concerned with methods, apparatus and processor control code for decoding signals, in particular by means of sphere decoding.

A sphere decoder configured to search for one or more strings of symbols less than a search bound from an input signal by establishing a value for each symbol in turn of a candidate said string by postulating values for each said symbol in turn of said candidate string and determining whether a said postulated symbol value results in a distance metric dependent upon said search bound being satisfied, each said symbol of a said candidate string for which values are postulated defining a level of said search.

The sphere decoder includes a data structure configured to define, for each level of said search, a set of symbol values from which said postulated values are selected, said sets of symbol values being different at different levels of said search.

Figure 5b

**Description**

This invention is generally concerned with methods, apparatus and processor control code for decoding signals, in particular by means of sphere decoding.

There is a continuing need for increased data rate transmission and, equivalently, for more efficient use of available bandwidth at existing data rates. Presently WLAN (wireless local area network) standards such as Hiperlan/2 (in Europe) and IEEE802.11a (in the USA) provide data rates of up to 54 Mbit/s. The use of multiple transmit and receive antennas has the potential to dramatically increase these data rates, but decoding signals received over a MIMO (multiple-input multiple-output) channel is difficult because a single receive antenna receives signals from all the transmit antennas. A similar problem arises in multi-user systems, although symbols transmitted over the different channels are then uncorrelated. There is therefore a need for improved decoding techniques for MIMO systems. These techniques have applications in wireless LANs, potentially in fourth generation mobile phone networks, and also in many other types of communication system.

A general problem in the field of signal processing relates to the transmission of a signal from a transmitter to a receiver over a channel, the problem being to determine the transmitted signal from the received signal. The received signal is affected by the channel impulse response or 'memory' of the channel which can cause interference between successively transmitted symbols, and the transmitted signal may also have been encoded prior to sending. A decoder or detector at the receiver has the problem of decoding or detecting the originally transmitted data and/or the original data that has been encoded at the transmitter. The optimum decoder is the *a posteriori* probability (APP) decoder which performs an exhaustive search of all possible transmitted symbols (or strings of transmitted symbols), modifying each by the channel response to determine a set of all possible received signals, and then selecting one or more of these with the closest Euclidian distance to the actually received signal as the most likely transmitted and/or encoded signal(s). However the computational complexity of such an approach grows exponentially with the memory of the encoder, channel impulse response length, number of bits per symbol, and with the number of transmitted symbols (length of string) to consider. As mentioned above, these problems are compounded in MIMO systems. Sub-optimal approaches are therefore of technical and commercial interest.

Sphere decoding is a reduced-complexity technique which can provide performance approaching that of an APP decoder. However the technique suffers from some problems, which are described further below, and which embodiments of the invention aim to address.

Sphere decoding has a range of applications in the field of signal processing. Here particular reference will be made to applications of the technique to signals received over a MIMO channel, and to multi-user systems. However embodiments of the invention described herein may also be employed in related systems, and for other types of decoding.

Another reduced complexity approximation to the APP solution is the so-called max-log approximation. Broadly speaking determining a bit likelihood value according to this approach involves determining maximum values for two terms, one of which corresponds to the bit having a first logic value, say +1, the other corresponding to the bit having a second logic value, say -1. It has been recognised that maximising each of these terms corresponds to minimising a related distance metric for a candidate string of transmitted symbols, preferably taking into account any *a priori* knowledge which can act as a soft input to the procedure, and that therefore this technique can be implemented using a sphere decoder. We will describe how sphere decoders embodying aspects of the invention may be employed to search for a minimum such metric.

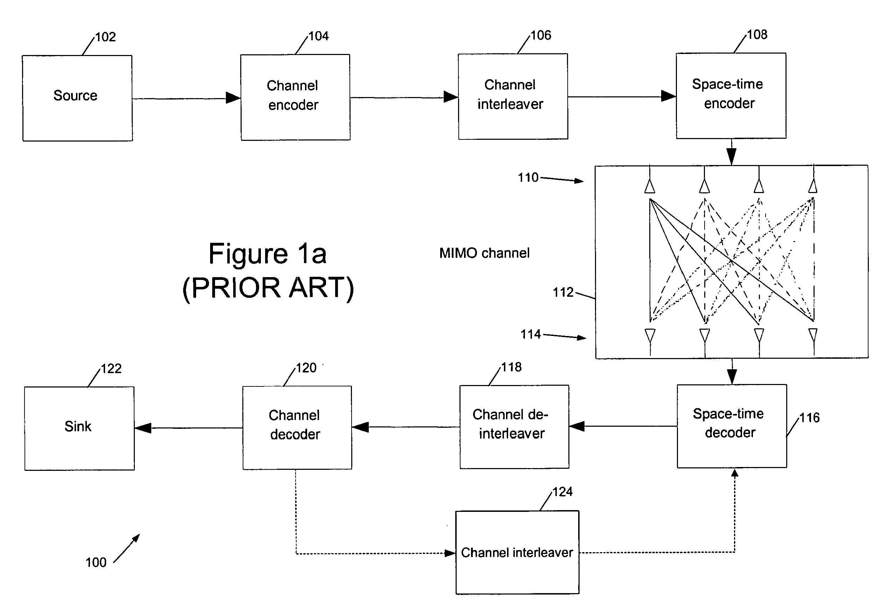

Figure 1a shows a typical MIMO data communications system 100. A data source 102 provides data (comprising information bits or symbols) to a channel encoder 104. The channel encoder typically comprises a convolutional coder such as a recursive systematic convolutional (RSC) encoder, or a stronger so-called turbo encoder (which includes an interleaver). More bits are output than are input, and typically the rate is one half or one third. The channel encoder 104 is followed by a channel interleaver 106 and, in this example, a space-time encoder 108. The space-time encoder 108 encodes an incoming symbol or symbols as a plurality of code symbols for simultaneous transmission from each of a plurality of transmit antennas 110.

Space-time encoding may be described in terms of an encoding machine, described by a coding matrix, which operates on the data to provide spatial and temporal transmit diversity; this may be followed by a modulator to provide coded symbols for transmission. Space-frequency encoding (or some other form of encoding) may additionally (or alternatively) be employed. Thus, broadly speaking, incoming symbols are distributed into a grid having space and time and/or frequency coordinates, for increased diversity. Where space-frequency coding is employed the separate frequency channels may be modulated onto OFDM (orthogonal frequency division multiplexed) carriers, a cyclic prefix generally being added to each transmitted symbol to mitigate the effects of channel dispersion.

The encoded transmitted signals propagate through MIMO channel 112 to receive antennas 114, which provide a plurality of inputs to a space-time (and/or frequency) decoder 116. The decoder has the task of removing the effect of the encoder 108 and the MIMO channel 112, and may be implemented by a sphere decoder. The output of the decoder 116 comprises a plurality of signal streams, one for each transmit antenna, each carrying so-called soft or likelihood data on the probability of a transmitted symbol having a particular value. This data is provided to a channel de-interleaver 118 which reverses the effect of channel interleaver 106, and then to a channel decoder 120, such as a Viterbi decoder, which decodes the convolutional code. Typically channel decoder 120 is a SISO (soft-in soft-out) decoder, that is receiving symbol (or bit) likelihood data and providing similar likelihood data as an output rather than, say, data on which a hard decision has been made (although in some applications a hard decision suffices). The output of channel decoder 120 is provided to a data sink 122, for further processing of the data in any desired manner.

In some communications systems so-called turbo decoding is employed in which a soft output from channel decoder 120 is provided to a channel interleaver 124, corresponding to channel interleaver 106, which in turn provides soft (likelihood) data to decoder 116 for iterative space-time (and/or frequency) and channel decoding. (It will be appreciated that in such an arrangement channel decoder 120 provides complete transmitted symbols to decoder 116, that is for example including error check bits.)

It will be appreciated that in the above described communication system both the channel coding and the space-time coding provide time diversity and thus this diversity is subject to the law of diminishing returns in terms of the additional signal to noise ratio gain which can be achieved. Thus when considering the benefits provided by any particular space-time/frequency decoder these are best considered in the context of a system which includes channel encoding.

One of the hardest tasks in the communications system 100 is the decoding of the space-time (or frequency) code, performed by decoder 116, as this involves trying to separate the transmitted symbols that are interfering with one another at the receiver. As previously mentioned the optimal decoder is the *a posteriori* probability (APP) decoder, which performs an exhaustive search of all possible transmitted symbols. However the number of combinations to consider is immense even for a small number of antennas, a modulation scheme such as 16 QAM (quadrature amplitude modulation), and a channel with a relatively short time dispersion, and the complexity of the approach grows exponentially with the data rate.

Some common choices for (in this example space-time block) decoding include linear estimators such as zero-forcing, and minimum mean-squared error (MMSE) estimators. The zero-forcing approach may be applied to directly calculate an estimate for a string of transmitted symbols or estimated symbols may be determined one at a time in a 'nulling and cancelling' method which subtracts out the effect of previously calculated symbols before the next is determined. In this way, for example, the symbols about which there is greatest confidence can be calculated first.

Sphere decoding or demodulation provides greatly improved performance which can approach that of an APP decoder, broadly speaking by representing the search space as a lattice (dependent upon the matrix channel response and/or encoder) and then searching for a best estimate for a transmitted string of symbols only over possible string of symbols that generate lattice points which lie within a hypersphere of a given radius centred on the received signal. The maximum likelihood solution is the transmitted signal which, when modified by the channel, comes closest to the corresponding received signal. In fact the matrix channel response and/or space-time encoder tends to skew the input point (transmitted signal) space away from a rectangular grid and in a convenient representation the search region in the input point space becomes an ellipsoid rather than a sphere, centered on an initial estimate (zero-forcing solution).

As the search space is reduced from the entire lattice to only a small portion of the lattice the number of computations required for the search is very much less than that required by an APP decoder, but similar results can be achieved. To apply such a procedure one must first identify which lattice points are within the required distance of the received signal. This relatively straightforward procedure is outlined below. Secondly one must decide what radius to employ. This is crucial to the speed of the search and should be selected so that some, but not too many, lattice points are likely to be found within the radius. The radius may be adjusted according to the noise level and, optionally, according to the channel. However even with a known search radius the search problem is unbounded which, in a practical system, means that the time necessary for a sphere decoding calculation (and hence the available data rate) cannot be fully determined; techniques for addressing this problem are described in the Applicant's co-pending UK patent application number 0323208.9, filed 3 Oct 2003, to which reference may be made.

Background prior art relating to sphere decoding can be found in:

E. Agrell, T. Eriksson, A. Vardy and K. Zeger, "Closest Point Search in Lattices", IEEE Trans. on Information Theory, vol. 48, no. 8, Aug 2002; E. Viterbo and J. Boutros, "A universal lattice code decoder for fading channels", IEEE Trans. Inform. Theory, vol. 45, no. 5, pp. 1639-1642, Jul. 1999; O. Damen, A. Chkeif and J. C. Belfiore, "Lattice code decoder for space-time codes, " IEEE Comms. Letter, vol. 4. no. 5, pp. 161-163, May 2000; B. M. Hochwald and S. T. Brink, "Achieving near capacity on a multiple-antenna channel," http://mars.bell-labs.com/cm/ms/what/papers/listsphere/, December 2002; "On the expected complexity of sphere decoding", in Conference Record of the Thirty-Fifth Asimolar Conference on Signals, Systems and Computers, 2001, vol. 2 pp. 1051- 1055; B. Hassibi and H. Vikalo, "Maximum-Likelihood Decoding and Integer Least-Squares: The Expected Complexity", in Multiantenna Channels: Capacity, Coding and Signal Processing, (Editors J. Foschini and S. Verdu), http://www.its.caltech.edu/~hvikalo/dimacs.ps; A. M. Chan, "A New Reduced-Complexity Sphere Decoder For Multiple Antenna System", IEEE International Conference on Communications, 2002, vol. 1, April-May 2002; L. Brunel, J. J. Boutros, "Lattice decoding for joint detection in direct-sequence CDMA systems", IEEE Transactions on Information Theory, , Volume: 49 Issue: 4, April 2003, pp. 1030 - 1037; A. Wiesel, X. Mestre, A. Pages and J. R. Fonollosa, "Efficient Implementation of Sphere Demodulation", Proceedings of IV IEEE Signal Processing Advances in Wireless Communications, pp. 535, Rome, June 15-18, 2003; US Patent Application Number US2003/0076890 B. M. Hochwald and S. Ten Brink, filed July 26, 2002, "Method and apparatus for detection and decoding of signals received from a linear propagation channel", to Lucent Technologies, Inc; US Patent Application Patent Number US2002/0114410 L. Brunel, filed August 22, 2002, "Multiuser detection method and device in DS-CDMA mode", to Mitsubishi; H. Vikalo, "Sphere Decoding Algorithms for Digital Communications", PhD Thesis, Standford University, 2003; B. Hassibi and H. Vikalo, "Maximum-Likelihood Decoding and Integer Least-Squares:

The Expected Complexity, in *Multiantenna Channels*: *Capacity*, *Coding and Signal Processing*, (editors J. Foschini and S. Verdu).

The Agrell et al reference, for example, describes closest-point search methods for an infinite lattice where the input is an arbitrary *m*-dimensional integer, that is $x \in Z^m$, reviewing the basic concept of lattice decoding and search methods (but only describing methods which provide a hard decision output). However this paper does not provide a solution for the detection or decoding problem where the lattice is finite and the input set is a set of symbol constellations or codewords which might not be of integer values (see later).

Wiesel et al describe one technique for determining a search radius by setting the search radius to the largest distance metric

$$\sqrt{\sum_{n=1}^{n_T} d_n^2} \, ,$$

among the *K* symbols found by the search algorithm. Here, *K* is a predetermined number of symbols, say 50, required to evaluate a soft output. The initial search radius is set to infinity until *K* symbols is found. When the list is full, i.e. *K* symbols found, the search radius is set to the largest distance metric in the list. A heap sort is proposed as an efficient method to sort the candidate list, such that the list of candidates has *K* shortest distance metrics possible. This effectively acts as a set-up procedure.

Other decoders or detectors (here the terms are employed substantially synonymously since both imply an attempt to solve a similar problem, that is detecting the originally transmitted data) include trellis-based decoders such as the Viterbi decoder (which have exponential computational complexity), and reduced complexity detectors which provides sub-optimum performance, such as the vertical BLAST (Bell labs Layered Space Time) decoder and the block decision feedback equalizer.

It is helpful, at this point, to provide an outline review of the operation of the sphere decoding procedure. For a string of *N* transmitted symbols an *N*-dimensional lattice is searched, beginning with the *N*th dimensional layer (corresponding to the first symbol of the string). A symbol is selected for this layer from the constellation employed and the distance of the generated lattice point from the received signal is checked. If the lattice point is within this distance the procedure then chooses a value for the next symbol in the string and checks the distance of the generated lattice point from the received signal in *N*-1 dimensions. The procedure continues checking each successive symbol in turn, and if all are within the bound it eventually converges on a lattice point in one dimension. If a symbol is outside the chosen radius then the procedure moves back up a layer (dimension) and chooses the next possible symbol in that layer (dimension) for checking. In this way the procedure builds a tree in which the lowest nodes correspond to complete strings of symbols and in which the number of nodes at the nth level of the tree corresponds to the number of lattice points inside the relevant nth dimensional sphere.

When a complete candidate string of symbols is found the distance of the lattice point, generated from the string of symbols, from the received signal is found and the initial radius is reduced to this distance so that as the tree builds only closer strings to the maximum-likelihood solution are identified. When the tree has been completed the decoder can be used to provide a hard output, i.e. the maximum likelihood solution, by choosing the nearest lattice point to the received signal. Alternatively a soft output can be provided using a selection of the closest lattice points to the received signal, for example using the distance of each of these from the received signal as an associated likelihood value. A heap sort has been proposed for selecting a subset of symbol strings having lattice points with the shortest distance metrics to the received signal (Wiesel et. al., *ibid*); another proposed method sets a fixed search radius throughout the search and a subset of symbol strings providing distance metrics less than the fixed search radius is selected (Hochwald and Brink, *ibid*).

One problem with conventional sphere decoding techniques, as explained further later, is that they only work for real integer symbol constellations and square complex symbol constellations (by decoupling the real and imaginary components), since the search procedure is based on finding lattice points where its inputs are real integers. In other words, broadly speaking, because current sphere decoding techniques handle complex signal constellations (i.e. constellations having values with real and imaginary components) by separating out the real and imaginary components these techniques fail when such a separation cannot validly be performed. This can occur, for example, when a signal transmitted from one transmit antenna is dependent upon a signal transmitted from another antenna (i.e. symbols are spatially coded across multiple antennas), or when a signal transmitted at one time is dependent upon a signal transmitted at an earlier time, or both. Here we are primarily concerned with the former (spatial coding) but embodiments of the invention may also be employed in the latter cases. There is also a third case (which we address), where a signal transmitted from one antenna or transmitter is multi-dimensional or complex-valued, when a symbol transmitted from one antenna may be independent of other symbols transmitted from other transmit antennas. In this case more than one search hierarchy of a sphere decoding procedure may correspond to one transmitted symbol.

As will be seen, the techniques developed to address these problems and described herein also have other applications, for example in multi-user systems and in bit-loaded communication systems (MIMO systems where different numbers of bits per symbol are loaded onto different transmit antennas).

Damen et al (*ibid*) describes a sphere decoder suitable for use with complex square constellation but this cannot be applied for a non-square constellation such as 8PSK (phase shift keying) or star QAM (quadrature amplitude modulation). The Hochwald and Brink references (*ibid*) provide a complex sphere decoder for a symbol constellation that forms a complex circle(s) such as in PSK. This employs a search disk and finds the range of constellation points by solving the overlap of the search disk and the constellation circle. However, this complex sphere decoder in requires sphere decoding in angular coordinates, where trigonometric functions are required in the procedure, which is computationally expensive. Wiesel et al (*ibid*), as previously mentioned, provides a reordering or sorting algorithm (based on a look-up table) such that the list of symbols to be searched is ordered in increasing distance from the zero-forcing solution. However this list of symbols to be searched and the reordering or sorting algorithm are both based on integer-valued symbol constellations.

Broadly speaking embodiments of the invention aim to address these drawbacks of the prior art by performing a mapping to a symbol constellation or codeword and performing searches on the finite set of symbol constellation or codeword values instead of the infinite set of integers, $\mathbf{s} \in Z^m$.

Thus according to a first aspect of the present invention there is provided a sphere decoder configured to search for one or more strings of symbols less than a search bound from an input signal by establishing a value for each symbol in turn of a candidate said string by postulating values for each said symbol in turn of said candidate string and determining whether a said postulated symbol value results in a distance metric dependent upon said search bound being satisfied, each said symbol of a said candidate string for which values are postulated defining a level of said search, the sphere decoder including a data structure configured to define, for each level of said search, a set of symbol values from which said postulated values are selected, said sets of symbol values being different at different levels of said search.

In embodiments a string of symbols may represent a set of symbols transmitted from a set of transmit antennas (that is a transmitted symbol vector) in a MIMO system, and/or a set or vector of symbols transmitted by different users in a multi-user system, and/or symbols transmitted by one or more transmit antennas over a period of time. By selecting from different sets of symbols when choosing or postulating candidate symbols for such a string of symbols, the sphere decoder can adapt to different modulation schemes being used by different transmit antennas, either of different users in a multi-user system, or different transmit antennas or a bit-loading MIMO system employing different modulation schemes for different transmit antennas. In the one or more strings of symbols the sphere decoder aims to identify (one for a hard output, more than one for a soft output) each transmit antenna corresponds to one (or possibly more) symbols positions in a said string.

In the case of a non-square complex constellation of possible symbols the set of symbols to be searched at a position in a string for which some symbols values have already been established may be made dependent upon the already-established symbols. Assuming a complex representation of the communication system is decoupled such that it is represented as real-valued representation with twice the dimension of the original system, there is a dependency between two real-valued symbols representing one complex symbol transmitted from one antenna. For example symbols may be coded across a plurality of transmit antennas in a MIMO system thus imposing a dependency between a symbol value transmitted from one antenna and a value transmitted from another of the MIMO system antennas. The above described sphere decoder can take account of such dependency by selecting a set of symbols to choose from at a particular position in a string of symbols dependent upon values previously established for one or more other symbols in the string (previously here referring to some earlier point in the construction of a candidate string of symbols rather than necessarily to symbols transmitted at an earlier time). With a multi-dimensional symbol constellation, for example, one symbol can be represented by more than one real value and the search may therefore be dependent on a string of previously found symbols.

Although embodiments of the invention will be described with reference to encoding across a plurality of transmit antennas in a MIMO system it will be appreciated that similar techniques may be used where symbols are additionally or alternatively encoded over time and/or over frequency.

From the more detailed discussion of sphere decoder embodiments later it will be understood that in embodiments a candidate transmitted symbol is chosen from one of the sets of symbol values to provide a lattice point (in received signal space) that is within a radius of the received signal. It will further be recognised that there need not be (and will generally not be) a unique set of symbol values for each level of the search hierarchy since it may be possible to re-use some sets of symbols at different levels of the search. Examples of this are given later. However, the set of symbol values from which symbols are selected may depend upon both the level of the search hierarchy and the previously found symbols. This is because depending upon the constellation the previously found symbols may not influence all the remaining symbols of a string - for example an initial symbol for a string may be selected from a complete set of possible symbols, a number of symbols thereafter may be influenced by the selection of the initial symbol and a further independent choice may be made selecting from all possible symbols. This arrangement can be advantageously implemented by a data structure comprising a plurality of tables, each table defining a set of possible symbol values. Thus the number of tables advantageously corresponds to the number of different sets of symbol values required for the different search levels or hierarchies, optionally taking into account the effect of previously found symbols on the number of sets required. Within each table the symbol values are preferably ordered according to distance from an initial estimate of a said string of symbols, for example a linear or zero forcing estimate, for example symbols being listed, closest first. Depending upon the number of symbols in a set and upon the range of values they cover a table may comprise a plurality of ordered lists of symbols, one of the ordered lists being selected responsive to the initial estimate of the symbol in the string of symbols. In this way a symbol closest to the initial estimate provides a starting point for a sphere decoder search and if the distance metric is not satisfied symbols in increasing distance from the initial estimate can be tested.

The above described techniques can also be used (or extended) to implement a form of bitwise decoding based upon a so-called max-log approximation to a maximum *a posteriori* probability (APP) detector. This is best understood with reference to the equations given later but, broadly speaking, the inventor has recognised that a sphere decoder can be adapted to determine the likelihood of a particular bit in the string of symbols having one of its binary values (one or zero) by determining minimum distance metrics for symbols constrained to have the bit at its first logic level, and at its second binary logic level. This max log approximation then provides a way to combine these two distance metrics, optionally with further *a priori* information, to provide an estimate of a log likelihood value for the bit. Thus to explain further, considering say the first bit of the string, the sphere decoder is constrained to search only strings or vectors of symbols which have this first bit set to logic one, to determine a minimum distance metric, and then (or concurrently) the sphere decoder searches over strings of symbols constrained to have this first bit set to the other of its binary logic values to find a second minimum distance metric, and these two distance metrics can then be used to determine a likelihood value for the bit, more precisely a log likelihood value, that is the likelihood that the bit will have one of its binary value as compared to the other or its values. It can be seen that such a search procedure involves constraining some of the symbols over which the sphere decoder searches (it will be recognised that the two, or for many bits, multiple, searches may be performed in series or in parallel or in some combination of the two). More particularly, in the example just given the first symbol of the string is constrained in the two searches in that only symbols with the first bit equal to a logic one, (or zero) are to be selected from, although later symbols in the string may be selected without this constraint. It will therefore be appreciated that the above described techniques for defining different sets of symbol values from which postulated symbols values are selected for different levels of the sphere decoder search may be readily adapted to the above described bit wise sphere decoding procedure. Thus in the above described procedure one of the sets of symbol values comprises only symbols corresponding to one of the data bits having a selected binary value. Further details of the implementation of such a max-log decoding technique using sphere decoders are described in the applicant's co-pending UK patent application no. 0323211.3 filed 3 October 2003, the contents of which are hereby incorporated by referenced.

Broadly speaking, therefore, it can be seen that embodiments of the invention provide sphere decoding techniques which are relatively straightforward to implement and which can cope with any type of complex constellation and with jointly transmitted symbols, for example from different users or transmit antennas, or different modulation schemes. Embodiments of the invention also provide a robust method of performing sphere decoding where a subset of the original constellation of symbols is searched, such as in bitwise- sphere-decoding where only symbol constellations corresponding to a selected bit being either one or zero are searched.

Thus in a further aspect the invention provides a method of decoding an input signal comprising signals received over a plurality of communication channels from a plurality of signal transmitters, said plurality of signal transmitters transmitting a plurality of symbols, said method of decoding searching for one or more strings of symbols representing an estimate of said transmitted symbols, said decoding comprising establishing a value for each symbol in turn of a candidate said string by postulating values for each said symbol in turn of said candidate string and determining whether a said postulated symbol value results in a distance metric dependent upon a search bound being satisfied, said search bound defining a search region dependent upon said input signal, each said symbol of a said candidate string for which values are postulated defining a level of said search, said decoding further comprising defining for each level of said search, a set of symbol values from which said postulated values are selected, said sets of symbol values being different at different levels of said search.

The invention further provides decoders configured to implement this method, and receivers including such decoders.

In another related aspect the invention provides a decoder for decoding a received signal comprising a string of symbols transmitted over a MIMO channel, the decoder comprising: a sphere decoder to search for candidate transmitted symbol strings within a radius of said received signal, and to provide a decoded data output; and a sphere decoder data structure configured to define a plurality of different sets of symbol values for said search, and wherein candidate symbols for symbols of said string are selectable from said different sets of symbol values according to their position in said string.

The skilled person will recognise that the above-described methods and decoders may be implemented using and/or embodied in processor control code. Thus in a further aspect the invention provides such code, for example on a carrier medium such as a disk, CD- or DVD-ROM, programmed memory such as read-only memory (Firmware) or on a data carrier such as an optical or electrical signal carrier. Embodiments of the invention may be implemented on a DSP (Digital Signal Processor), ASIC (Application Specific Integrated Circuit) or FPGA (Field Programmable Gate Array). Thus the code may comprise conventional program code, or micro-code, or, for example, code for setting up or controlling an ASIC or FPGA. In some embodiments the code may comprise code for a hardware description language such as Verilog (Trade Mark) or VHDL (Very high speed integrated circuit Hardware Description Language). As the skilled person will appreciate, processor control code for embodiments of the invention may be distributed between a plurality of coupled components in communication with one another.

These and other aspects of the invention will now be further described, by way of example only, with reference to the accompanying figures in which:

Figures 1a and 1b show, respectively, an example of a MIMO space-time coded communications system employing a sphere decoder, and a pictorial illustration of a sphere decoder tree search;

Figure 2 shows a block diagram of a first example of a max-log decoder;

Figures 3a and 3b show a block diagrams of second and third examples of a max-log decoder;

Figures 4a and 4b show, respectively, a constellation for 8PSK, and sphere decoder lattice points/layers for searching at different search hierarchies for the constellation of Figure 4a;

Figures 5a to 5c show, respectively, a flow diagram of a sphere decoder suitable for decoding a generic symbol constellation in accordance with an embodiment of the present invention, a receiver incorporating a generic symbol constellation sphere decoder, and an example of a transmitter suitable for use with the receiver of Figure 5b;

Figure 6 shows a generic block diagram of a transmitter with concatenated encoders;

Figure 7 shows a block diagram of a receiver with concatenated decoders for use with the transmitter of figure 6; and

Figure 8 shows a block diagram of a receiver with concatenated decoders and iterative decoding for use with the transmitter of figure 6;

Figure 9 shows a block diagram of a receiver employing iterative feedback between two equivalent decoders; and

Figure 10 shows graphs of bit error rate against signal-to-noise ratio (Eb/No) for embodiments of sphere decoders according to the present invention.

Broadly speaking one preferred embodiment of a sphere decoder may be described as a decoder for decoding a transmitted signal encoded as a string of symbols and received over a channel as a received signal, each transmitted symbol having one of a plurality of values, the decoder comprising: means for searching for one or more candidate strings of symbols, a candidate string of symbols comprising a string of candidate symbols, by searching for candidate symbols of said string within a region of a multi-dimensional lattice determined by said channel response, said lattice having one dimension associated with each of said symbols of said string, said region being defined by distance from said received signal; and means for decoding a said string of symbols for said received signal by selecting one or more of said candidate strings of symbols; wherein said means for searching for candidate symbols is configured to select candidate values for said transmitted symbols and to test whether a part of said lattice defined by a selected said candidate is within a bounding distance from said received signal. The multidimensional lattice may be additionally or alternatively be determined by a space-time or other encoding employed at the transmitter.

The procedure attempts to test a candidate value for each symbol of the string but, depending upon the channel and received signal a complete tree with at least one complete set of candidate symbols for a string at an end node of the tree may not be constructed. Preferably the searching is stopped after a limiting number of candidate symbol tests. When the searching fails to locate a candidate string of symbols a linear, preferably zero-forcing, estimate may be provided as an output of the decoding procedure. Any linear estimate, such as a linear estimate with successive interference cancellation and an MMSE solution may be employed. Generally each symbol is defined by one or more bits so that the string of symbols defines a string of bits. The decoding may then comprise (or further comprise) providing a probability value for each bit of the string of bits. The symbols of the zero-forcing solution can be employed to calculate such soft bit values when a candidate string of symbols is not located.

The decoding may provide a hard output by selecting the minimum distance candidate string of symbols for output, or a so-called soft output may be provided comprising, in effect, a plurality of decoded strings of symbols each with an associated probability, for example dependent upon a distance of a lattice point generated from the string of symbols from the received signal. The searching searches for candidate symbols of the string, which form lattice points within a region of the multi-dimensional lattice determined by said channel response. The soft output may, in effect, comprise (probabilities for) all of the candidate strings of symbols found by the searching, to avoid the need for a sort. Each symbol is generally associated with one or more transmitted bits and the decoding may further comprise providing a probability value for each of these bits, for example determined based upon all of the candidate strings of symbols found by the searching, where at least one candidate string of symbols is found. A probability value for a bit may be determined by taking a ratio of likelihood values for the bit having first and second logic levels, based upon sets of symbols (of the identified candidate strings) in which the bit has respective first and second logic values. Where, for a bit, no symbols of a candidate string have one (or other) or these values and such a ratio cannot be calculated a default probability value for the bit may be provided, for example based upon a minimum distance metric for the other logic value, or comprising a default maximum value. The searching for candidate symbols preferably proceeds in order of increasing distance from a zero-forcing estimate of said transmitted signal (or another linear or simple to compute estimate), for example determined from said received signal and a response of said channel.

The string of symbols may comprise symbols transmitted from a plurality of users in a multi-user communications system or a string of symbols transmitted by a plurality of transmit antennas, and received by a second plurality of receive antennas, in a MIMO communications system (in both cases the channel comprising a form of matrix channel). In a MIMO communications system the string of symbols may comprise symbols of a space-time block code (STBC) or symbols of a space-time trellis code (STTC), or symbols of a space-frequency code, or symbols of a space-time/frequency code. A space-frequency coded signal is encoded across a plurality of frequency channels, for example in a multi-carrier OFDM (orthogonal frequency division multiplexed) system in which case the decoder may be preceded by a serial-to-parallel converter and fast Fourier transformer, and followed by an inverse Fourier transformer and a parallel-to-serial conversion.

It will be appreciated that sphere decoding methods may be employed, for example, in a turbo-decoder with iterative code and channel decoding.

We will also describe a bitwise decoder for decoding a received signal, the received signal being provided by a transmitted signal comprising a string of symbols sent over a channel, each said symbol comprising one or more bits, said decoder comprising: a plurality of sphere decoders each configured to determine a minimum bit-dependent distance metric for a string of symbols in which a bit has a defined value, said distance metric being dependent upon a distance of said received signal from an estimated received signal determined from said string and a response of said channel; and a bit likelihood estimator coupled to each of the sphere decoders and configured to determine a bit likelihood value for each bit of said string dependent upon the minimum distance metrics.

In a preferred arrangement one of the sphere decoders is configured to determine a maximum likelihood distance metric, in particular a (common) distance metric for each bit of a complete, maximum likelihood string of symbols. One further maximum likelihood detector may then be provided for each bit of the string of symbols, for determining a minimum distance metric for the relevant bit, each of these maximum likelihood decoders determining the distance metric for a value of the bit different to its value in the maximum likelihood string of symbols. Preferably the maximum likelihood string of symbols is determined taking into account *a priori* data relating to the string of symbols, in particular an *a priori* probability value for each bit of the string, thus facilitating a soft input. An initial search radius may be set, for example, according to a limiting log-likelihood ratio value required by an application or one of the sphere decoders can be used to set an initial sphere radius for another, or a sphere decoder determining a (minimum) distance metric for a particular bit may have its initial radius set to the value of the metric given by the maximum likelihood string of symbols with the relevant particular bit inverted or 'flipped'.

Further details of sphere decoders along the above lines may be found in the inventor's co-pending UK patent applications, numbers 0323208.9 and 0323211.3 both filed on 3 October 2003, which are hereby incorporated by reference.

Sphere decoding - mathematical background

Consider now a space-time transmission scheme with $n_T$ transmitted and $n_R$ received signals (or, equivalently, a transmitted and a received signal with $n_T$ and $n_R$ components respectively). The $1 \times n_R$ received signal vector at each instant in time is given by:

$$\tilde{\mathbf{r}} = \tilde{\mathbf{s}}\,\tilde{\mathbf{H}} + \tilde{\mathbf{v}} \qquad\qquad \text{Equation 1}$$

where

$$\tilde{\mathbf{s}} = \begin{bmatrix} \tilde{s}^{\,1} & \cdots & \tilde{s}^{\,n_T} \end{bmatrix}$$

denotes the transmitted signal vector whose entries are chosen from a complex constellation $C$ with $M = 2^q$ possible signal points, where $q$ is the number of bits per constellation symbol. The AWGN (Additive White Gaussian Noise) vector $\tilde{\mathbf{v}}$ is a $1 \times n_R$ vector of independent, zero-mean complex Gaussian noise entries with variance of $\sigma^2$ per real component. The notation $\tilde{\mathbf{H}}$ denotes an $n_T \times n_R$ multiple-input/multiple-output (MIMO) channel matrix (at an instant in time) assumed to be known or estimated at the receiver, with $n$-row and $m$-column component $h_{n,m}$, $n = 1, \cdots, n_T$, $m = 1, \cdots, n_R$, representing the narrowband flat fading between the $n$-th transmitted signal and $m$-th received signal. The channel fade may be assumed to be constant over a symbol period.

In a receiver a MIMO channel estimate H can be obtained in a conventional manner using a training sequence. For example a training sequence can be transmitted from each transmit antenna in turn (to avoid interference problems), each time listening on all the receive antennas to characterise the channels from that transmit antenna to the receive antennas. This need not constitute a significant overhead and data rates are high in between training and, for example, with slowly changing indoor channels training may only be performed every, say, 0.1 seconds. Alternatively orthogonal sequences may be transmitted simultaneously from all the transmit antennas, although this increases the complexity of the training as interference problems can than arise.

Equation 1 is general and, for example, all linear space-time block coded transmission schemes can be written in this form. For example, BLAST (G. J. Foschini, "Layered space-time architecture for wireless communication in a fading environment when using multi-element antennas," Bell Labs. Tech. J., vol. 1, no. 2, pp. 41-59, 1996) uses the transmit antennas to send a layered structure of signals, and therefore $n_T$ represents the number of transmit antennas, $n_R$ represents the number of receive antennas and $\tilde{\mathbf{H}}$ is the true MIMO channel matrix. Other examples include orthogonal designs (S. M. Alamouti, "A simple transmitter diversity scheme for wireless communications," IEEE J. Sel. Area Comm., pp. 1451-1458, Oct. 1998; and V. Tarokh, H. Jafarkhani and A. R.

Calderbank, "Space-time block codes from orthogonal designs," IEEE Trans. Info. Theory., vol. 45, pp. 1456-1467, July 1999) and linear dispersive codes (B. Hassibi and B. Hochwald, "High-rate codes that are linear in space and time," IEEE Trans. Info.

Theory., vol. 48, pp. 1804-1824, Jul. 2002), where $\tilde{\mathbf{H}}$ is an effective channel derived from one or more uses of the true channel.

Equation 1 may also be used to represent a CDMA system where the multi-user detector estimates the signal $\tilde{\mathbf{s}}$ transmitted from different users and matrix $\tilde{\mathbf{H}}$ represents the combined spreading and channel effects for all users.

The $n$-th complex component of the transmitted symbol $\tilde{\mathbf{s}}$ is obtained using the symbol mapping function

$$\tilde{s}^{\,n} = map(\mathbf{x}^n), \qquad n = 1, \cdots, n_T \qquad\qquad \text{Equation 2}$$

where

$$x^n = [x_1^n \cdots x_q^n]$$  Equation 3

is a vector with $q$ transmitted data bits, and $q$ is the number of bits per constellation symbol. (More generally, however, $\tilde{s}$ denotes a string of symbols encoded over space and/or time and/or frequency and n runs over the length of the string). Therefore the $(q \cdot n_T)$ -length vector of bits transmitted can be denoted by

$$x = [x^1 \cdots x^{n_T}]$$  Equation 4

and the transmitted vector constellation may be written as

$$\tilde{\mathbf{s}} = map(\mathbf{x})$$  Equation 5

The maximum *a posteriori* probability (APP) bit detection, conditioned on the received signal $\tilde{\mathbf{r}}$ for the space-time transmission of Equation 1 can be expressed in likelihood ratios (LLR) as follows:

$$L_P\left(x_j^n \mid \tilde{\mathbf{r}}\right) = \ln \frac{P(x_j^n = +1 \mid \tilde{\mathbf{r}})}{P(x_j^n = -1 \mid \tilde{\mathbf{r}})}$$

$$= L_A\left(x_j^n\right)$$

$$+ \ln \underbrace{\frac{\sum_{\mathbf{x} \in X_{n,j}^{+1}} \exp\left(-\frac{1}{2\sigma^2} \cdot \left\|\tilde{\mathbf{r}} - \hat{\mathbf{s}}\tilde{\mathbf{H}}\right\|^2 + \frac{1}{2} \cdot \mathbf{x}_{[n,j]}^T \cdot \mathbf{L}_{A,[n,j]}\right)}{\sum_{\mathbf{x} \in X_{n,j}^{-1}} \exp\left(-\frac{1}{2\sigma^2} \cdot \left\|\tilde{\mathbf{r}} - \hat{\mathbf{s}}\tilde{\mathbf{H}}\right\|^2 + \frac{1}{2} \cdot \mathbf{x}_{[n,j]}^T \cdot \mathbf{L}_{A,[n,j]}\right)}}_{L_E\left(x_j^n \mid \tilde{\mathbf{r}}\right)}$$  Equation 6

$$n = 1, \cdots, n_T \qquad j = 1, \cdots, q$$

and the $L_E(\cdot)$ term can be approximated by

$$L_E\left(x_j^n \mid \tilde{\mathbf{r}}\right) \approx \underbrace{\frac{1}{2} \max_{\mathbf{x} \in X_{n,j}^{+1}}\left\{-\frac{1}{\sigma^2} \cdot \left\|\tilde{\mathbf{r}} - \hat{\mathbf{s}}\tilde{\mathbf{H}}\right\|^2 + \mathbf{x}_{[n,j]}^T \cdot \mathbf{L}_{A,[n,j]}\right\} - \frac{1}{2} \max_{\mathbf{x} \in X_{n,j}^{-1}}\left\{-\frac{1}{\sigma^2} \cdot \left\|\tilde{\mathbf{r}} - \hat{\mathbf{s}}\tilde{\mathbf{H}}\right\|^2 + \mathbf{x}_{[n,j]}^T \cdot \mathbf{L}_{A,[n,j]}\right\}}_{\max - \log \text{ approximation}}$$  Equation 7

where x is the sequence of possible transmitted bits, $\mathbf{x}_{[n,j]}$ denotes the sub vector of x obtained by omitting its element $x_j^n$, and $\mathbf{L}_{A,[n,j]}$ denotes the vector of all $L_A$ -values, also omitting the element corresponding to bit $x_j^n$; and where, for each term in the summations of Equation 6, s is given by Equation 5 with x as the vector under the summation sign, and where $\|\cdot\|$ denotes the Euclidean norm. The sets $X_{n,j}^{+1}$ and $X_{n,j}^{-1}$ are the sets of $2^{(q \cdot n_T - 1)}$ vectors of bits **x** having $x_j^n = +1$, and $x_j^n = -1$, respectively, that is

$$X^{+1}_{n,j} = \{X | x^n_j = +1\}$$

and

$$X^{-1}_{n,j} = \{x | x^n_j = -1\}.$$

In other words the sum in, say, the numerator of Equation 6 runs over all symbols that have bit $x^n_j = +1$.

The noise variance $\sigma^2$ may be obtained in any convenient manner, depending upon the overall system design. For example, the noise variance may be obtained during the training period where channel impulse response is estimated. During the training period, the transmitted symbol sequence is known. Together with the estimated channel impulse response, the 'noiseless' received signal is obtained. The noise variance may be estimated from evaluating the noise statistic of the sequence of received signal during the 'training period', knowing the sequence of 'noiseless' received signal.

The symbol $\hat{s}$ is the mapping to the possible transmitted bit vector **x**. The functions $L_P(\cdot)$, $L_A(\cdot)$ and $L_E(\cdot)$ denote the *a posteriori*, *a priori* and extrinsic likelihood respectively. The *a priori* likelihood $L_A(\cdot)$ may be derived, for example, from an *a priori* input from a channel coder (for, say, iterative turbo decoding) or may be set or initialised, say to zero (a log likelihood ratio $L(.)$ of 0 implying that +1 and -1 are equiprobable). Equation 6 is the MAP solution and Equation 7 provides the maximum logarithmic approximation of the MAP solution (sometimes called the max-log-MAP solution). We will describe techniques which are able to provide an approximation of the solutions of both Equation 6 and Equation 7.

According to Equation 6 APP detection requires an exhaustive evaluation of $2^{q \cdot n_T}$ distance metrics

$$\left\| \tilde{\mathbf{r}} - \hat{\mathbf{s}}\tilde{\mathbf{H}} \right\|^2$$

corresponding to number of elements in the sets $X^{+1}$ and $X^{-1}$. The computational complexity of APP detection increases exponentially with the number of bits per symbol q and the number of spatial-multiplexed transmitted symbol $n_T$. One way to approximate Equation 6 is to include only the candidates in the set $X^{+1}$ and $X^{-1}$ for which

$$\left\| \tilde{\mathbf{r}} - \hat{\mathbf{s}}\tilde{\mathbf{H}} \right\|^2 \leq \rho^2 \qquad \qquad \text{Equation 8a}$$

$$\left\| r - \hat{s}H \right\|^2 - \sigma^2 x^T \cdot L_A \leq \rho^2 \qquad \qquad \text{Equation 8b.}$$

where Equation 8a is without *a priori* knowledge and Equation 8b is with *a priori* knowledge, where $\rho$ is is the bound radius of the sphere decoder.

This approximation assumes that the candidates providing the distance metrics outside the bound defined by Equations 8a and 8b do not provide a significant contribution to the APP detection (see Equation 6). The sphere decoding algorithm provides a procedure to rapidly find a list of candidates satisfying either Equation 8a or 8b.

The original sphere decoder, also known as the lattice decoder, (Viterbo and Boutros, *ibid*) provides the maximum likelihood estimation, that is a hard output of transmitted symbols for a real constellation and channels, representing the communication system as a lattice. However, here we also describe soft-in/soft-out sphere decoders suitable, among other applications, for a multiple antenna system.

Sphere decoding for square constellations

The following description is based upon that in the Applicant's earlier UK patent application number 0323208.9.

To obtain a lattice representation of the multiple antenna system for implementing a spheric decoding procedure, the complex matrix representation of Equation 1 can be transformed to a real matrix representation with twice the dimension of the original system as follows:

$$r = sH + v \qquad \qquad \text{Equation 9}$$

where

$$\mathbf{r} = \left[ \Re\{\tilde{\mathbf{r}}\} \quad \Im\{\tilde{\mathbf{r}}\} \right]$$ 

Equation 10

$$\mathbf{s} = \left[ \Re\{\tilde{\mathbf{s}}\} \quad \Im\{\tilde{\mathbf{s}}\} \right]$$

Equation 11

$$\mathbf{H} = \begin{bmatrix} \Re\{\tilde{\mathbf{H}}\} & \Im\{\tilde{\mathbf{H}}\} \\ -\Im\{\tilde{\mathbf{H}}\} & \Re\{\tilde{\mathbf{H}}\} \end{bmatrix}$$

Equation 12

$$\mathbf{v} = \left[ \Re\{\tilde{\mathbf{v}}\} \quad \Im\{\tilde{\mathbf{v}}\} \right]$$

Equation 13

where the notations $\Re\{\cdot\}$ and $\Im\{\cdot\}$ refer to the real and imaginary component of the vector/matrix, respectively.

This decomposition however only works for square constellations such as QAM (quadrature amplitude modulation), where the set of possible real-valued symbols for the search corresponding to the real component of the complex constellation is effectively the same as the set of real-valued symbols for the search corresponding to the imaginary component of the complex constellation. This is one limitation which embodiments of the invention seek to address.

Using the nomenclature used in lattice theory, the real-valued representation of the channel **H** is the generator matrix of the lattice, the channel input (transmit signal) s is the input point of the lattice and the noiseless channel output term **sH** defines a lattice point.

An $n$-dimensional lattice can be decomposed into $(n - 1)$ dimensional layers. The search algorithm for a $n$ dimensional lattice can be described recursively as a finite number of $(n - 1)$-dimensional search algorithms. Viterbo and Boutros (*ibid*) described the search algorithm in terms of three different states, or cases, of the search:

Table 1

| | |
|---|---|
| **Case A** | The $n$-th dimensional layer is within the search bound: The layer is decomposed into $(n-1)$-th dimensional layers. |
| **Case B** | The search successfully reaches the zero-dimensional layer and a lattice point in the search region is found |
| **Case C** | The n-th dimensional layer is not within the search bound: The search moves up one step in the hierarchy of layers. |

As we will describe in more detail later, we here consider a modification of this basic procedure in which, at the n-th search hierarchy the n-th symbol $s^n$ from the string of symbols to be jointly detected is "searched" by the sphere decoder.

The search procedure is simplified if the lower triangular matrix $\mathbf{U}^T$, derived from QR decomposition or Cholesky factorisation (sometimes referred to as taking the square root of a matrix) of the channel matrix, is used as a generator matrix for the lattice. For example, if QR decomposition is used (see, for example, G.H. Golub and C.F. van Loan, Matrix Computations, John Hopkins University Press, 1983), the lower triangular matrix $\mathbf{U}^T$ (and upper **U**) are defined as follows:

$$U^T U = H^T H$$

Equation 14

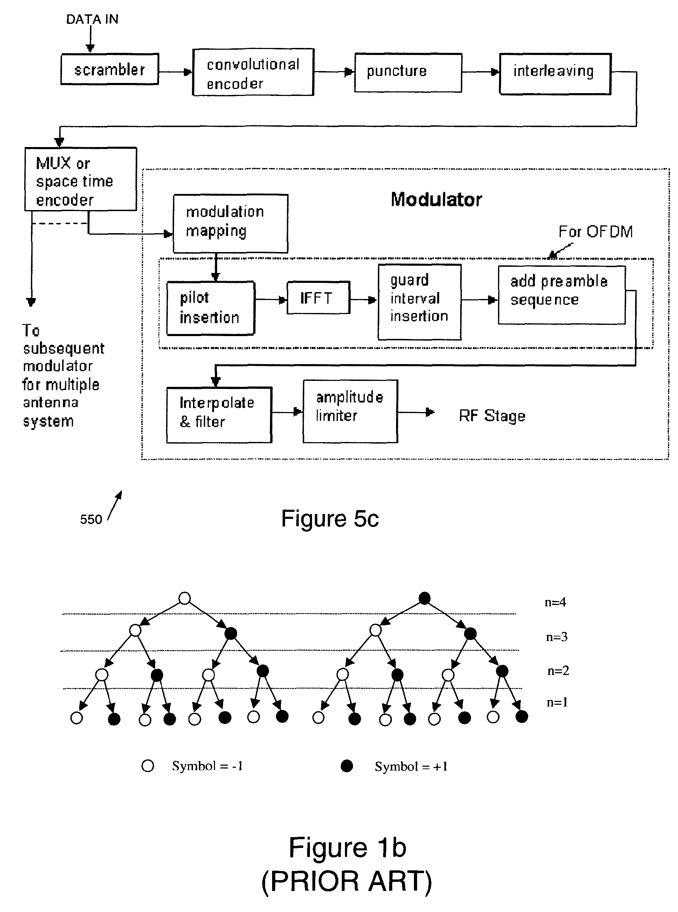

Here, the lattice search involves a generalized nulling and cancelling, where after a component of the vector s that satisfies Equation 8 is found, its contribution to the distance metrics is subtracted. However (unlike in normal nulling and cancelling heuristics) components of $\hat{s}$ are not fixed until an entire vector which satisfies Equation 8 is found. Therefore, the algorithm essentially performs a search on a tree as shown in Figure 1b, where the nodes on the n -th level of the tree correspond to the sub-vector $[\hat{s}^n \ldots \hat{s}^{n_T}]$.

Describing further the distance metrics used by the search algorithm, we now assume the generator matrix is a lower-triangular matrix. During the n th dimensional lattice search or the search of the n th transmitted signal, the orthogonal distance of the received signal **r** to the layer with index $\hat{s}^n \in C_{real}$, where $C_{real}$ is the real-valued symbol constellation representation, is defined as:

$$d_n = \left| \frac{\hat{r}^n}{h_{n,n}} - \hat{s}^n \right| \cdot \left| h_{n,n} \right| \qquad \text{Equation 15}$$
$$= \left| e^{n,n} - \hat{s}^n \right| \cdot \left| h_{n,n} \right|$$

where $\hat{r}^n$ is the n th component of the projected received signal in the $n$ -dimensional space, having found the higher level transmitted symbols, $\hat{s}^{n+1}, \cdots, \hat{s}^{nT}$ (in this example we assume $n_T = n_R$). The term $e^{n,n}$ is the estimate of the $n$ th transmitted symbol according to the projected received signal. The estimate of rest of the transmitted symbols $\hat{s}^{i,i} = 1, \cdots, n$ can be obtained recursively as follows (see Agrell et al., *ibid*.):

$$e^{n,i} = e^{n+1,i} - \frac{d_{n+1}}{h_{i,n+1}} \qquad \text{where } i = 1, \cdots, n. \qquad \text{Equation 16}$$

Therefore, the distance metrics $d_n$ can be updated according to the current transmitted symbol searched, $\hat{s}^n$ and the previously found higher level transmitted symbols, $\hat{s}^{n+1}, \cdots, \hat{s}^{nT}$. Since the distance metrics during the $n + 1$ th dimensional lattice search varies with the $n + 1$th transmitted symbol found, the bound used at the $n$ -th dimensional search may be updated as follows:

$$\rho_n^2 = \rho_{n+1}^2 - d_n^2 \qquad \text{Equation 17}$$

Having described the distance metrics used in the search algorithm, the ordering of the constellation symbols to be searched will now be explained. The distance metrics (now using the real-valued representation) can be written as follows:

$$\| r - \hat{s}H \|^2 = (\hat{s} - s")^T H^T H (\hat{s} - s")$$
$$+ r^T (I - H(H^T H)^{-1} H^T) r \qquad \text{Equation 18}$$

where

$$s" = (H^T H)^{-1} H^T r \qquad \text{Equation 19}$$

is the unconstrained maximum likelihood estimate of the transmitted symbol **s** and also known as the zero-forcing solution. Therefore, one can redefine the bound given in Equation 8 as follows:

$$(\hat{s}" - s")^T H^T H (\hat{s} - s") \leq \rho^2 \qquad \text{Equation 20}$$

It is observed that the range of $\hat{s}$ satisfying Equation 20 centres around the zero forcing solution s" . Therefore, the symbols to be searched at $n$ -th level, $s^n \in C_{real}$, are preferably ordered according to an increasing distance from the zero-forcing solution $s"^n$ at each $n$ -th level. For example, if the symbol constellation is 4PAM (Pulse Amplitude Modulation), i.e., $C_{real} = \{-3,-1,+1,+3\}$, and the zero-forcing solution at $n$-th level search is $s"^n = -1.1$, the symbols to be searched are ordered as {-1,-3,+1,+3}. This avoids an explicit calculation of the search upper and lower bound. The possible transmitted symbols are searched according to the above-mentioned ordering and the search at $n$ -th level is stopped when the distance metrics exceed the bound, i.e.,

$$d_n^2 > \rho_n{}^2 \qquad\qquad \text{Equation 21}$$

for the current symbol $\hat{s}^n$ searched. The search then proceeds to the next search hierarchy or level. The ordering can be done via a look up table storing all the possible combinations. For example, given a $c \times \boldsymbol{M}$ matrix $\Phi$ where $c = 2M$ is the number of symbol search combination and $M$ is the number of possible signal points, the sorted vector **slist** for the zero-forcing solution $s''^n$, is given as the $i$ -th row of $\Phi$ as follows:

$$\text{slist} = \Phi(i) \text{ where } i = \lceil s''^n \rceil + M -1 \qquad\qquad \text{Equation 22}$$

and $\lceil \cdot \rceil$ denotes the rounding towards infinity. Broadly speaking this technique comprises a modified version of the Schnorr-Euchner strategy described in Agrell et al. (*ibid*).

Methods for ordering the symbols to be searched using look-up table are described in more detail in A. Wiesel, X. Mestre, A. Pages and J. R. Fonollosa, "Efficient Implementation of Sphere Demodulation", Proceedings of IV IEEE Signal Processing Advances in Wireless Communications, pp. 535, Rome, June 15-18, 2003, which is hereby incorporated by reference.

The zero forcing solution $s''^n$ (or other linear estimate) is re-estimated at every search hierarchy since the symbol found in the previous search $\hat{s}^{n+1}$ is cancelled out to obtain a reduced-order integer least-square problem with n unknowns (see Equations 15 and 16).

The search radius can be set responsive to noise and/or channel conditions. Where a soft output is required all the symbols found may be used for the soft output evaluation, as described below, to avoid the additional complexity of a sorting algorithm to obtain a specific number of most likely transmitted strings of symbols.

In summary, the procedure comprises three main processes:

i) Transformation of the multiple-input-multiple-output (MIMO) channel into a lattice representation.
ii) The search procedure, which searches for the nearest lattice point to the received signal in the case of hard detection or the set of lattice points around the received signal in the case of soft detection. Where a soft input is available, providing an *a priori* probability of a transmitted symbol or codeword, this can be utilised to assist the search (see also, for example, H. Vikalo and B. Hassibi, "Low-Complexity Iterative Detection and Decoding of Multi-Antenna Systems Employing Channel and Space-Time Codes," Conference Record of the Thirty-Sixth Asilomar Conference on Signals, Systems and Computers, vol. 1, Nov. 3-6, 2002, pp. 294-298; and H. Vikalo and B. Hassibi, "Towards Closing the Capacity Gap on Multiple Antenna Channels", ICASSP'02, vol. 3, pp. III-2385 - III-2388).
iii) Where a soft output is needed, providing the soft output based on the soft input and the set of lattice points found in the search region (this is unnecessary for a hard detection sphere decoder).

Max-log MAP decoder

Having briefly described the concept of the sphere decoder, we will now describe how this can be applied to provide a max-log MAP (maximum *a posteriori* probability) based decoder. Thus here we provide a max-log-MAP solution by searching for the two candidates that satisfy the max $\{\cdot\}$ term in Equation 7. Therefore, the search procedure is performed for every bit $x_j^n$ to find the two candidates that satisfy the following optimisations:

$$\hat{\mathbf{s}}^+ = \min_{\hat{s} \in X_{n,j}^+} \left\{ \left\| \mathbf{r} - \hat{\mathbf{s}}\mathbf{H} \right\|^2 - \sigma^2 \mathbf{x}^T \cdot \mathbf{L}_A \right\}$$

for bit $x_j^n = +1$ and

$$\hat{\mathbf{s}}^- = \min_{\hat{\mathbf{s}} \in X_{n,j}^-} \left\{ \|\mathbf{r} - \hat{\mathbf{s}}\mathbf{H}\|^2 - \sigma^2 \mathbf{x}^T \cdot \mathbf{L}_A \right\}$$

for bit $x_j^n = -1$, where $n = 1, \cdots, n_T$ and $j = 1, \cdots, q$ (where in the above equations $\hat{\mathbf{s}} \in X_{n,j}^\pm$ means the candidate symbol with bit $x_{n,j} = \pm 1$). The corresponding distance metrics are obtained for the two candidates, $d_{n,j,+}^2$ and $d_{n,j,-}^2$ where

$$d_{n,j,+}^2 = \|\mathbf{r} - \hat{\mathbf{s}}^+ \mathbf{H}\|^2 - \sigma^2 \mathbf{x}^{+T} \cdot \mathbf{L}_A^+ \qquad\qquad \text{Equation 23}$$

and

$$d_{n,j,-}^2 \; \|\mathbf{r} - \hat{\mathbf{s}} \mathbf{H}\|^2 - \sigma^2 \mathbf{x}^{-T} \cdot \mathbf{L}_A^- \qquad\qquad \text{Equation 24}$$

The vectors $\mathbf{x}^+$, $\mathbf{x}^-$ and $\mathbf{L}_A^+$, $\mathbf{L}_A^-$ correspond to the bit sequences and a priori information of the symbols $\hat{\mathbf{s}}^+$ and $\mathbf{s}^-$.

Therefore, the max-log-MAP approximation of the a posteriori extrinsic LLR (log likelihood ratio) value is given by:

$$L_P\left(x_j^n \mid \mathbf{r}\right) \approx \underbrace{\frac{1}{2\sigma^2}\left(-d_{n,j,+}^2 + d_{n,j,-}^2\right)}_{\max - \log \text{ approximation}} \qquad\qquad \text{Equation 25}$$

The relationship between $L_P$ and $L_E$ is given by $L_P = L_A + L_E$.

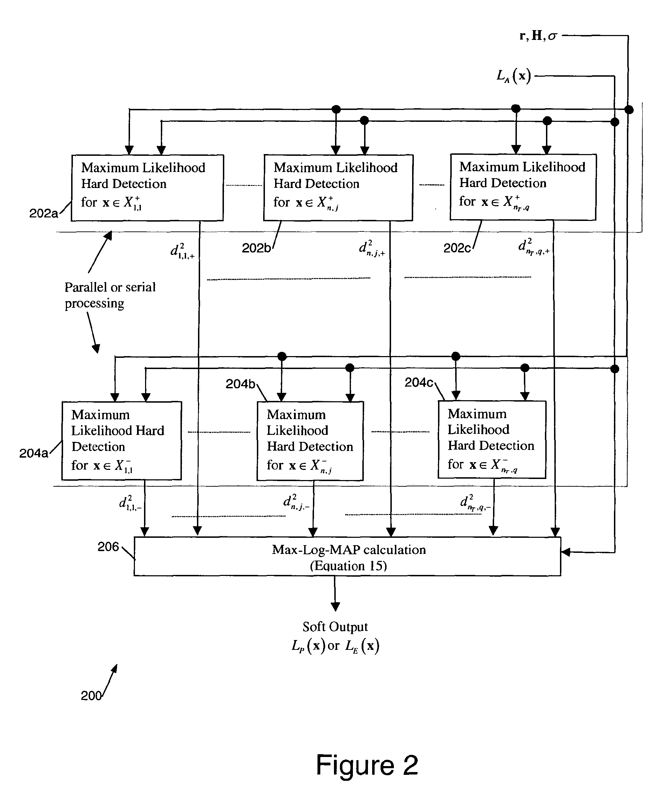

Referring to Figure 2, this shows a block diagram of a max-log MAP decoder 200 configured to determine bit likelihood values in accordance with the max-log approximation of Equation 25. The decoder comprises a plurality of hard detectors or decoders 202a-c, 204a-c, each configured to determine a distance metric $d_{n,j,+}^2$, $d_{n,j,-}^2$, for a possible value of a particular bit $x_j^n$ +1 for detectors/decoders 202, -1 for detectors/decoders 204, according to respective equations 23 and 24, based upon input values for $\mathbf{r}$, $\mathbf{H}$, $\sigma$ and, where available, $L_A(\mathbf{x})$. In this embodiment n runs over the transmit antennas and $j$ runs over the bits of a constellation symbol. Each of these detectors/decoders 202,204 provides a distance metric value $d_{n,j,+}^2$, $d_{n,j,-}^2$ to an output stage 206 that determines a bit likelihood value for each bit of the transmitted string of symbols according to Equation 25. The likelihood values may comprise "extrinsic" and/or *a posteriori* bit likelihood values. The skilled person will appreciate that the detectors/decoders 202,204 may be implemented in series, for example as repeated instances of a software process, or in parallel, or in a combination of serial and parallel processes.

A detector/decoder 202,204 need only provide a hard output, that is an output identifying a most likely candidate with a particular bit value $x_j^n$ being +1 or -1 and/or providing a minimum distance metric $d_{n,j,+}^2$, or $d_{n,j,-}^2$. Thus the skilled person will appreciate that the arrangement of Figure 2 may employ any maximum likelihood hard detectors/decoders that can provide the appropriate distance metrics. However in a preferred embodiment hard detectors/decoders 202,204 are implemented using one or more sphere decoders.

For the received vector $\mathbf{r}$, either candidate $\hat{\mathbf{s}}^+$ or $\hat{\mathbf{s}}^-$ is the maximum likelihood estimate $\hat{\mathbf{s}}_{ML}$ - that is the maximum likelihood solution provides one set of bit values $\mathbf{x}_{ML}$ and corresponding distance metrics $d_{ML}^2$. Thus maximum likelihood sphere decoding can be performed first and the bit-wise sphere decoding may then be performed to obtain the distance metrics, $d_{n,j,\neq ML}^2$, for the bit values which do not correspond to the maximum likelihood symbol estimate.

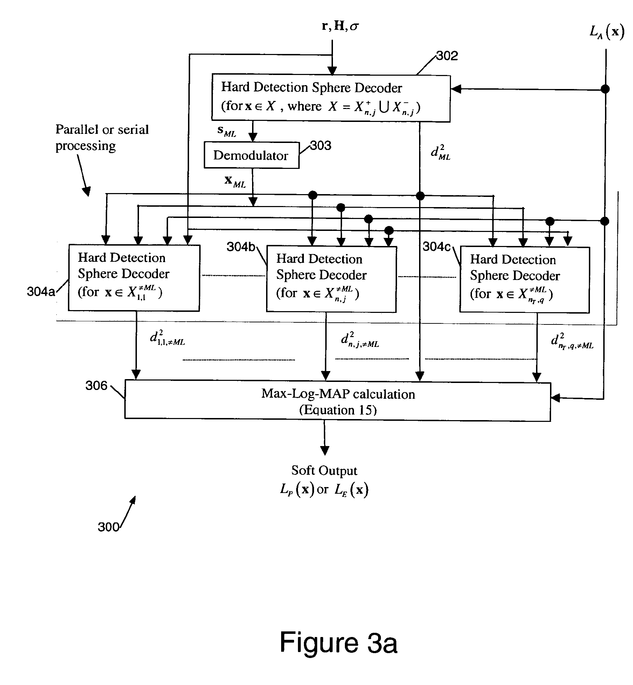

Figure 3a shows a block diagram of a max-log decoder 300 configured to determine bit likelihood values in this way, and employing sphere decoders as hard detectors. In Figure 3a hard detection blocks 304a-c and output stage 306 correspond to a combination of detectors/decoders 202 and 204 which correspond to the set of non-maximum-likelihood bit sequence $\mathbf{x} \in X_{n,j}^{\neq ML}$ and to output stage 206 of Figure 2 respectively. An additional hard detector 302, preferably a sphere decoder, determines a maximum likelihood symbol string estimate $\hat{s}_{ML}$ and a demodulator 303 converts this symbol estimate to a bitwise estimate $\hat{\mathbf{x}}_{ML}$; hard detection sphere decoder 302 also provides a corresponding bit likelihood value $d_{ML}^2$ (common to all the bits of $\mathbf{x}_{ML}$).

Further details of such a decoder are described in the Applicant's UK patent application number 0323211.3 filed 3 Oct 2003, and also in PCT/GB2004/**XXXXXX** claiming priority from this UK application, the contents of which are hereby incorporated by reference.

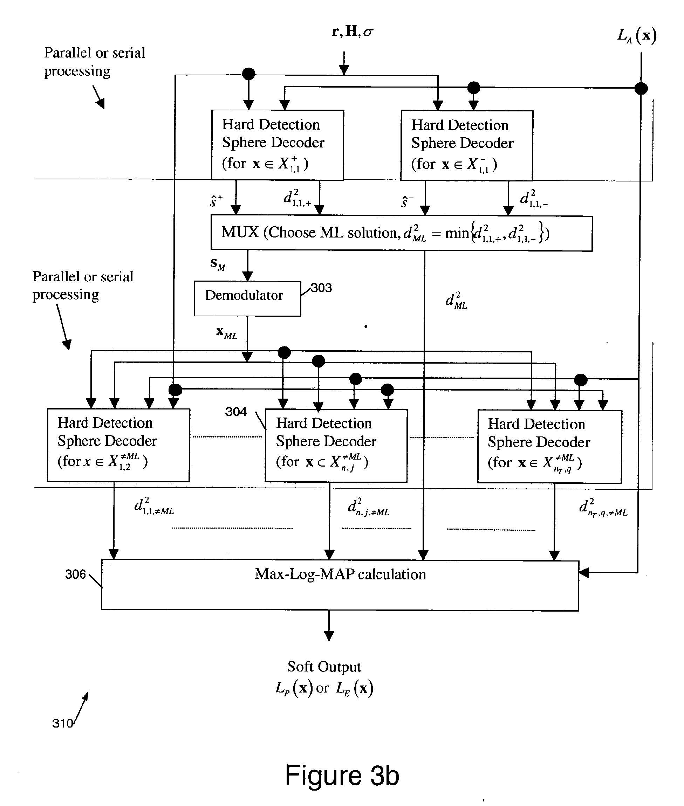

Figure 3b shows a block diagram of a third example of a two-stage max-log-MAP sphere decoder 310, in which similar elements to those of Figure 3a are indicated by like reference numerals. In the decoder of Figure 3b the first stage comprises two maximum likelihood decoders configured to determine a minimum distance metric for the first bit, each of these maximum likelihood decoders determining a distance metric for the first bit having one of a first and second logic level. Here, a string of symbols corresponding to the shorter distance metric provides the maximum likelihood transmitted symbols. The second stage comprises further maximum likelihood detectors, provided for each subsequent bit, each of these maximum likelihood decoder determining a distance metric for a value of the bit different to its value in the maximum likelihood string of symbols. Either or both stages of the maximum likelihood detector may be implemented using parallel processing.

Sphere decoding for multi-user systems and generic constellations

A difficulty with applying the above decoding techniques to a generic symbol constellation is that, in the general case, one symbol of a transmitted string may be dependent upon another. For example, $s^2$, say, may not be independent of $s^1$ because $s^1$ and $s^2$ may constitute a single complex symbol.

Embodiments of the invention introduce a mapping function for each search hierarchy that adapts the original sphere decoding technique to process a general complex symbol constellation. Each different search hierarchy $n$ has its specific list of possible real-valued symbols to be searched. (Each search hierarchy searches for one of the string of symbols to be jointly detected by the sphere decoder.) Therefore, there is a mapping between the current search hierarchy and the list of real-valued symbols to be searched.

For a real-valued system, embodiments of the invention map each lattice layer to be searched to a set of real-valued constellation symbols or codewords to be searched for that particular search hierarchy. Thus a lattice search is performed on a finite set of lattice layers corresponding to the symbol constellation or codeword instead of on the infinite set of integer-indexed layers corresponding to the lattice input, $\mathbf{s} \in Z^m$. Here, the set of real-valued symbols or codewords may be different for different search hierarchies. For example, in the case of multi-user detection to detect to data transmitted by three users, the first and second users might employ a BPSK (binary phase shift keying) scheme, i.e., $s^1, s^2 \in \{-1,+1\}$ and the third user might employ a 4PAM (pulse amplitude modulation) scheme, i.e., $s^3 \in \{-1.8974,-0.6325,0.6325,1.8974\}$. Therefore, the first and second search hierarchies (which detect the data transmitted from the first and second users) are performed for the set $s^1, s^2 \in \{-1,+1\}$, whereas the third search hierarchy (which detect the data transmitted form the third user) is performed for the set $s^3 \in \{-1.8974, -0.6325, 0.6325, 1.8974\}$.

For the case of a complex constellation, a complex representation of the communication system is decoupled and transformed into a real matrix representation with twice the dimension of the original system and the decoding procedure maps the lattice layers to be searched to either the real or imaginary component of the symbol constellation or codeword. Again, the different search hierarchies may employ different sets of real-valued symbols to be searched, depending on the application.

The skilled person will understand that in a similar manner embodiments of the invention may also be employed for decoding in a MIMO system employing so-called bit loading. Such a transmission system uses ("loads") different numbers of bits per symbol for different transmit antennas, for example depending on the quality of channel experienced by a transmit-receive antenna channel link (a MIMO system generally aims to have the different transmit-receive antenna channels relatively uncorrelated with one another). For example in 3-by-3 MIMO system, a first antenna might transmit BPSK, a second antenna 16QAM, and the third antenna QPSK. The techniques described here facilitate robust implementation of a sphere decoder if such a bit-loading scheme is employed. Bit-loading has been proposed, for example, for some future WLAN (wireless local area network) standards.

In some cases, the set of lattice layers or real-valued symbols to be searched is conditioned on a layer or real-valued symbol found in a previous search, that is on a symbol previously identified as forming part of a candidate string of symbols. This allows the use of non-square complex symbol constellations where two search hierarchies are required to detect one complex symbol. Here, the mapping of the set of real-valued symbols to be searched for the real component, for example, is performed according to the previously found real-valued symbol, corresponding to the imaginary component. The parameters of the mapping are the index of the current search hierarchy n and the previously found symbol $s^{n+1}$. A look-up table provides the possible set of symbols to be searched according to the mapping parameters $n$ and $s^{n+1}$.

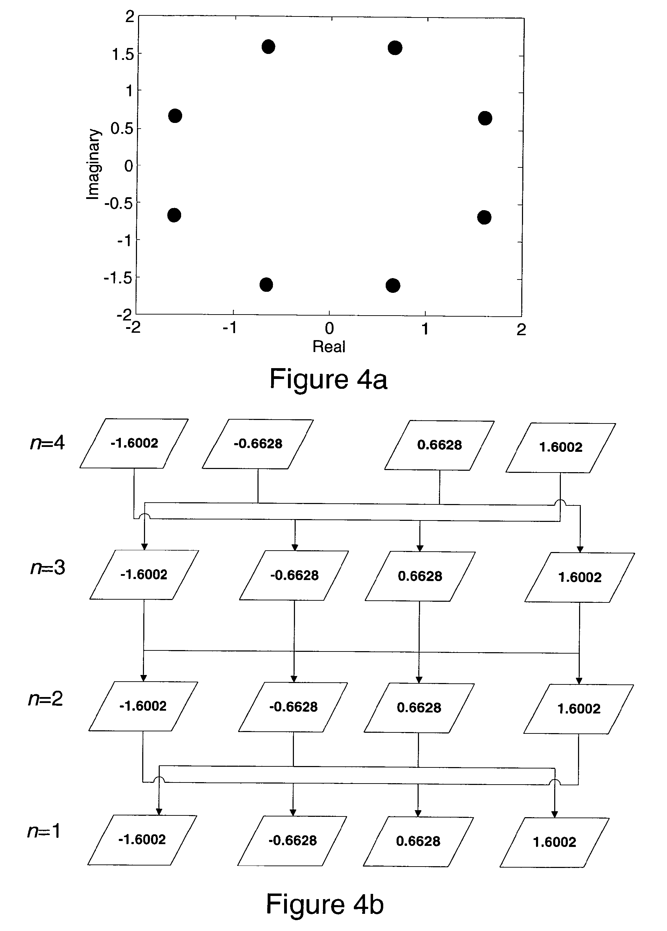

Figure 4a shows a constellation for 8PSK with the set of possible symbols:

$$s \in \begin{cases} 1.6002 + 0.6628i, \ 0.6628 + 1.6002i, \\ -1.6002 + 0.6628i, \ -0.6628 + 1.6002i, \\ 0.6628 - 1.6002i \ \ 1.6002 - 0.6628i, \\ -0.6628 - 1.6002i, -1.6002 - 0.6628i \end{cases}$$

In this case the real matrix representation of the 8PSK constellation will be the input set $s_{real}$ = {-1.6002, -0.6628, 0.6628, 1.6002}. There will be four lattice layers to be searched correspond to the four real-valued possible symbols. Since the constellation is non-square, the actual set of layers corresponding to the real-valued possible symbols is dependent on the layer found in the previous search hierarchy.

Figure 4b shows the set of input lattice points or layers to be searched at the n-th search hierarchy for the case of 2-by-2 MIMO system employing 8PSK; here each layer represents a real-valued transmit symbol to be decoded (that is a pair of real values derived, as above, from a complex value). As can be seen, the set of variables to be searched depends upon the result of the search at the previous ($n-1$ th) hierarchical layer. For example, if the symbol $s^4_{real}$ =-1.6002 is found to be in the search region at $n$=4, the set of input symbols $s^3_{real} \in$ {-0.6628, 0.6628} is considered in the lattice search at $n$=3. The real-valued symbols $s^4_{real}$ and $s^3_{real}$ correspond to one complex symbol. The next search hierarchy will not be dependent on the symbol $s^3_{real}$ found. Therefore if $s^3_{real}$ =-0.6628 is considered, the set of input lattice point to be searched at $n$=2 is full set $s^2_{real} \in$ {-1.6002, -0.6628, 0.6628, 1.6002}.

A look-up table providing the list of symbols to be searched is given in Table 2 below, which shows a symbol search look-up table of a sphere decoder for two-transmit antenna 8PSK BLAST system.

Table 2

| Current search hierarchy, $n$ | Previously found symbol, $s^{n+1}$ | List of symbols to be searched |
|---|---|---|
| 4, 2 (Even numbers) | -1.6002, -0.6628, 0.6628, 1.6002 | -1.6002, -0.6628, 0.6628, 1.6002 |
| 3, 1 (Odd numbers) | -1.6002, 1.6002 | -0.6628, 0.6628 |
| 3, 1 (Odd numbers) | -0.6628, 0.6628 | -1.6002, 1.6002 |

Note that the previously found symbol, $s^{n+1}$, can be represented by an index instead of the symbol itself depending on the implementation of the procedure.

Preferably a set of symbols to be searched is ordered according to increasing distance from the zero forcing solution $s_{ZF}$ = $(H^T H)^{-1} H^T r$, and the search is ordered likewise.

A general look-up table, represented by a $J \times K$ matrix $T$ is advantageously used to provide one or more sets of symbol lists to provide this search ordering. The row vector of the look-up table provides a list of symbols which are ordered such that the symbols have increasing distance from the zero forcing solution $s_{ZF}$. The $j$ th row vector, where $j$ =1, $\cdots$ , $J$, is given selected follows:

$$j = \begin{cases} 1, & \text{such that } s_{ZF}^n \leq s_{\min} \\ J & \text{such that } s_{ZF}^n \geq s_{\max} \\ \lceil a \cdot s_{ZF}^n \rceil + b, & \text{otherwise} \end{cases} \qquad \text{Equation 26}$$

where $K$ is the number of constellation symbols to be searched at a search hierarchy, $s_{\min}$ is the minimum valued symbol in the list of symbols to be searched, $s_{\max}$ is the maximum valued symbol in the list of symbols to be searched, and $a$ and $b$ are a scaling factor and a constant, respectively, such that the ceiling function $\lceil \cdot \rceil$ provides the index of the possible symbol which is closest to the zero-forcing solution $s_{ZF}^n$ at the nth search hierarchy. Here $J$ is the number of ordered sequences of constellation symbols required to define possible ordering sequences in order of increasing distance from the zero forcing solution $\mathbf{s}_{ZF}$ (see for example $\mathbf{T}_1$ below, where the first row could correspond to a symbol value just below 0.6628, -0.6628 coming next, and the second row could correspond to a symbol value just above 0.6628). This implies, for example, that the first row in the matrix begins with the smallest symbol (most likely for $s_{ZF}^n \leq s_{\min}$) and that the last row begins with the largest symbol (most likely for $s_{ZF}^n \leq s_{\min}$).

Using the example given above, the 8PSK system has the following ordering or sorting table (the polarity of the look-up table is reversed for negative-valued $s_{ZF}^n$, since the symbol constellation is symmetrical):

$$\mathbf{T}_1 = \begin{bmatrix} 0.6628 & -0.6628 & 1.6002 & -1.6002 \\ 0.6628 & 1.6002 & -0.6628 & -1.6002 \\ 1.6002 & 0.6628 & -0.6628 & -1.6002 \end{bmatrix},$$

$$T_2 = [0.6628 \ -0.6628],$$

$$T_3 = [1.6002 \ -1.6002],$$

where $T_1$, $T_2$ and $T_3$ correspond to the ordering table when the search hierarchy is $n \in \{2,4\}$ and the previously found symbols $s^{n+1} \in \{-1.6002,-0.6628,0.6628,1.6002\}$, the search hierarchy $n \in \{1,3\}$ and the previously found symbols $s^{n+1} \in \{-1.6002,1.6002\}$, the search hierarchy $n \in \{1,3\}$ and the previously found symbols $s^{n+1} \in \{-0.6628,0.6628\}$, respectively.

In this example the parameters used in Equation 26 which determines the row vector that provides the ordered list of symbols are given as $a = 1$, $b = 0$, $s_{\min} = 0.6628$, $s_{\max} = 1.6002$ (for a positive valued $s_{ZF}^n$) for all the look-up tables $T_1$, $T_2$, $T_3$. For negative valued zero-forcing solution $s_{ZF}^n$, the sign or polarity of $s_{ZF}^n$ is ignored (that is $|s_{ZF}^n|$ is used instead of $s_{ZF}^n$ in Equation 26) to provide the correct row vector of the look-up table in Equation 26 and the polarities of the elements in the look-up tables $T_1$, $T_2$, $T_3$ are reversed.

The skilled person will further understand that variants of this procedure may also be employed for max-log sphere decoding as described above. In the above described max-log decoding procedure a search is performed over all strings of symbols for which a given bit is +1 ($\hat{\mathbf{s}} \in X_{n,j}^{+1} = \{x \mid x_j^n = +1\}$) or -1 ($\hat{\mathbf{s}} \in X_{n,j}^{-1} = \{x \mid x_j^n = -1\}$). This is equivalent to constraining the symbols searched over at a particular search hierarchy, for example for $x_1^1 = +1$ constraining the first symbol of the string to have its first bit set to +1. The above described symbol mapping facilitates such max-log MAP sphere decoding, where only a subset of possible symbol constellations, corresponding to a transmitted bit being 1 or 0 (or +1 or -1), is considered in the search.

Broadly speaking, therefore, embodiments of the invention facilitate robust sphere decoding for a general case symbol constellation, and in particular sphere decoding is possible where a complex but non-square symbol constellation is employed. Examples of such symbol constellations include star QAM, 8PSK and 16PSK. Embodiments of the invention also enable sphere decoding where spatially multiplexed signal transmission is employed in a space-time coded system, and/or where signals transmitted from different users in a CDMA system use different symbol constellations. An example of such a system is a two-user CDMA system with different data rates and/or with an adaptive modulation and coding (AMC) scheme, in which a first user might employ, say, a QPSK modulation scheme whereas the second user might use, say, a 16QAM modulation scheme.

Example of sphere decoder implementation

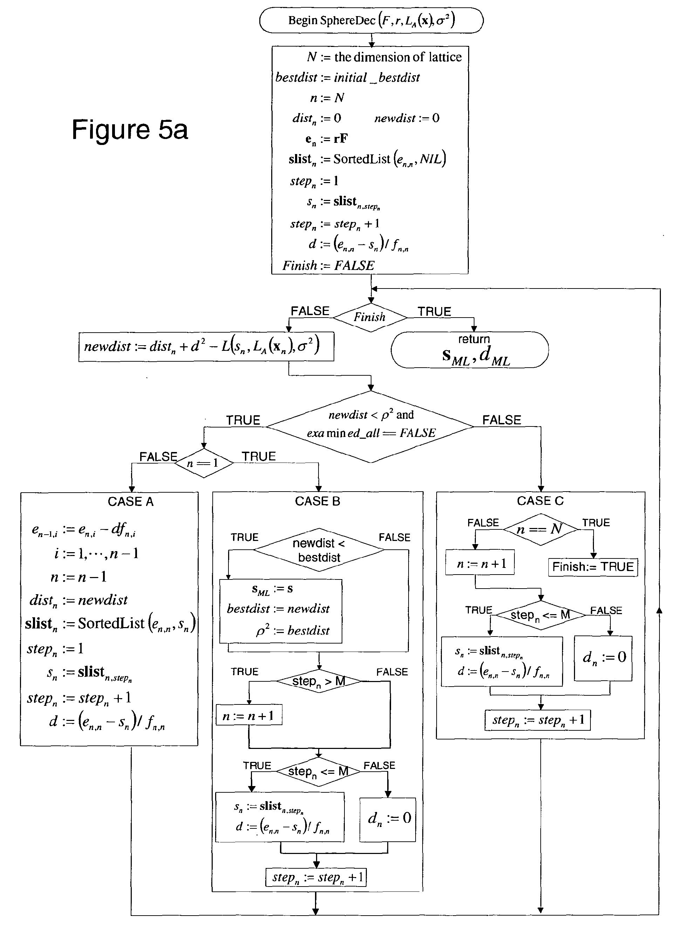

Figure 5a shows a flow diagram for generic symbol constellation sphere decoding in accordance with the above described procedure. The skilled person will recognise that the flow diagram of Figure 5a may be implemented in hardware, or software, or in a combination of the two, using serially implemented or concurrent functions, or both. The example of Figure 5a shows a hard decision sphere decoder but a soft sphere decoding procedure may be implemented in a similar manner, in accordance with the equations given above.

In Figure 5a, which is based upon a conventional sphere decoding procedure with modifications, the generator matrix of the lattice $\mathbf{H}$ ($\mathbf{F} = \mathbf{H}^{-1}$ where F is a triangular matrix and $\mathbf{H}$ is pre-processed to be a triangular matrix, for example using QR decomposition) is the lattice representation of the communication system and the received signal is r. Here r is pre-processed in the same way as the generator matrix for the search procedure. For example, if $\ddot{\mathbf{H}}$ is the original channel matrix, the QR decomposition of matrix $\ddot{\mathbf{H}}$ provides $\ddot{\mathbf{H}} = (\mathbf{QR})^T$ and therefore $\mathbf{H} = \mathbf{R}^T$. Given that the original received signal vector is r, the pre-processed received signal is thus given by $\mathbf{r} = \mathbf{rQ}^T$. The outputs of the procedure are $\mathbf{s}_{ML}$ and $d_{ML}$. The output $S_{ML}$ is the lattice input (transmitted signal) corresponding to the lattice point closest to the received signal $\mathbf{r}$ and is the maximum likelihood solution. The output $d_{ML}$ is the distance metric corresponding to the lattice input $\mathbf{s}_{ML}$.

The search region is defined by the search radius $\rho^2$. The function *SortedList*(*a*, *b*) provides the row vector of the general look-up table matrix T as described in Equation 26 where $s^n_{ZF} = \alpha$ and provision is made for the look-up table matrix to be dependent on the symbol *b* found in the previous search hierarchy. Thus $\mathbf{slist}_n$ is a vector of length *M* where *M* is the number of possible symbols to searched through at search hierarchy *n* (equivalent to *K* in Equation 26), and step$_n$ counts from 1 to *M*. The notation $\mathbf{slist}_{n,i}$ refers to the *i*th element of the vector $\mathbf{slist}_n$. The zero-forcing solution at the *n* th dimensional search is given by $\mathbf{e_n} := \mathbf{rF}$. The number of unknowns (length of the string of symbols to be estimated) is *N.* Here, $N = 2n_T$ for a system employing a complex symbol constellation where the complex representation is decoupled to a real representation with twice the dimension of the original system.

The three Cases A, B and C are as described above; broadly speaking the procedure initialises n = N and examines symbols in **slist** order until all have been examined (examined_all is true when all symbols in $\mathbf{slist}_n$ have been examined at the *n*th dimensional search), moving up a layer (Case C) when outside the search radius $\rho^2$ and finishing when back at the top of the tree (n= =N). The total number of cases (A, B or C) examined may, if desired, be limited by counting the number of the distance metrics determined and stopping when this exceeds a maximum or limiting value (as described further in the Applicant's UK patent application number 0323208.9).

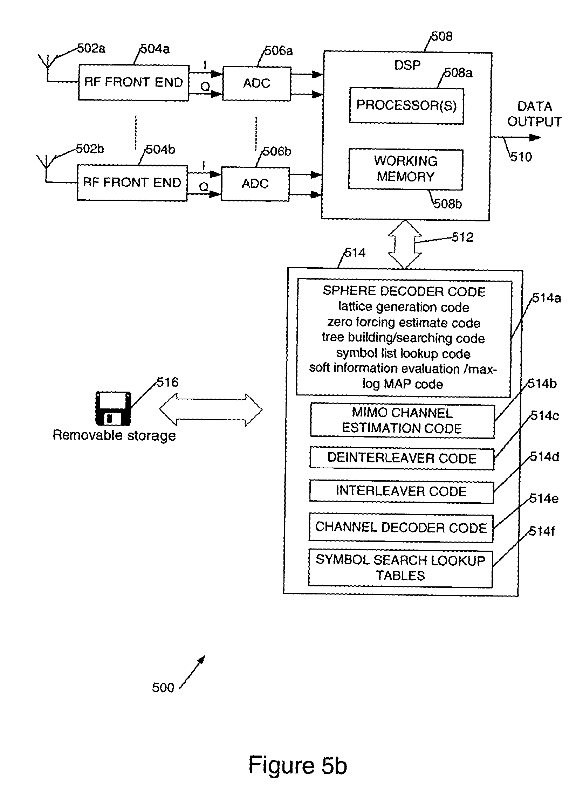

Figure 5b shows a receiver 500 incorporating a decoder configured to implement an embodiment of the above described procedure. Figure 5c shows an example of a transmitter 550 suitable for use with the receiver of Figure 5b.

Referring to Figure 5b, receiver 500 comprises one or more receive antennas 502a, b (of which two are shown in the illustrated embodiment) each coupled to a respective rf front end 504a,b, and thence to a respective analogue-to-digital converter 506a,b and to a digital signal processor (DSP) 508. DSP 508 will typically include one or more processors 508a and working memory 508b. The DSP 508 has a data output 510 and an address, data and control bus 512 to couple the DSP to permanent program memory 514 such as flash RAM or ROM. Permanent program memory 514 stores code and optionally data structures or data structure definitions for DSP 508.

As illustrated program memory 514 includes sphere decoder code 514a comprising lattice generation code (from the matrix/MIMO channel estimate), zero forcing estimate code, tree building/searching code, and symbol list lookup code. A soft output decoder may include soft information evaluation code; a max-log decoder may include max-log code to provide a serial or concurrent plurality of hard sphere decoder implementations and determine a max-log MAP function. The stored program code, when running on DSP 508, implements corresponding functions as described above. Program memory 514 also includes MIMO channel estimation code 514b to provide a MIMO channel estimate H, and, optionally, de-interleaver code 514c, interleaver code 514d, channel decoder code 514e, and a set of symbol search lookup tables 514f, for example as previously described with reference to Equation 26. Implementations of de-interleaver code, interleaver code, and channel decoder code are well known to those skilled in the art. Optionally the code in permanent program memory 514 may be provided on a carrier such as an optical or electrical signal carrier or, as illustrated in Figure 5, a floppy disk 516.

The data output 510 from DSP 508 is provided to further data processing elements of receiver 500 (not shown in Figure 5) as desired. These may a baseband data processor for implementing higher level protocols.

The receiver front-end will generally be implemented in hardware whilst the receiver processing will usually be implemented at least partially in software, although one or more ASICs and/or FPGAs may also be employed. The skilled person will recognise that all the functions of the receiver could be performed in hardware and that the exact point at which the signal is digitised in a software radio will generally depend upon a cost/complexity/power consumption trade-off.

In other embodiments the decoder may be provided as a signal processing module, for example implementing a soft-in/soft-out (or hard decision) space-time decoder.

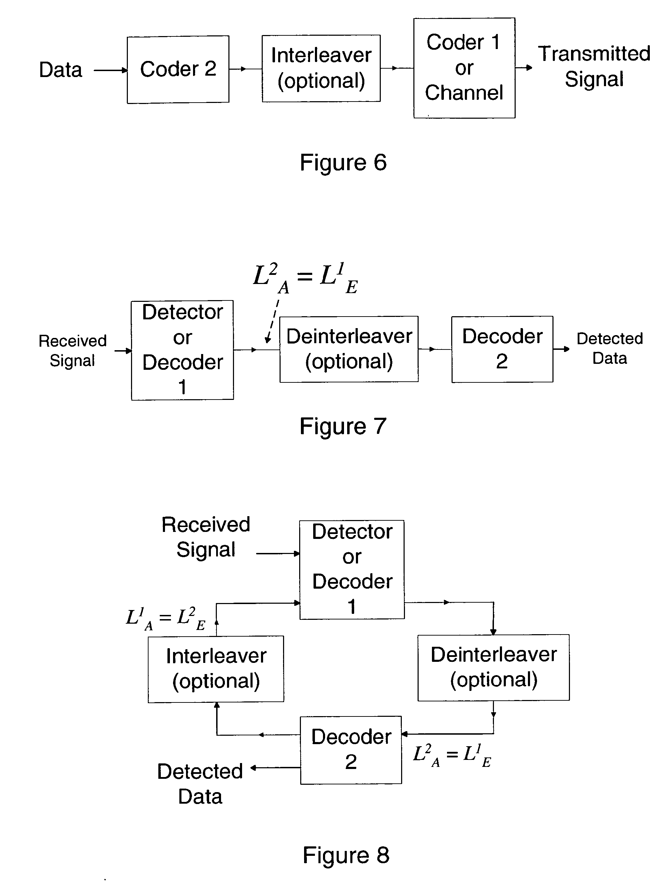

Figure 6 shows a block diagram of a transmitter with concatenated channel encoders; the frequency selective channel can be considered to be an 'encoder'. In Figure 6 Coder 2 may comprise a conventional channel encoder and Coder 1 an STBC coder in combination with the channel.

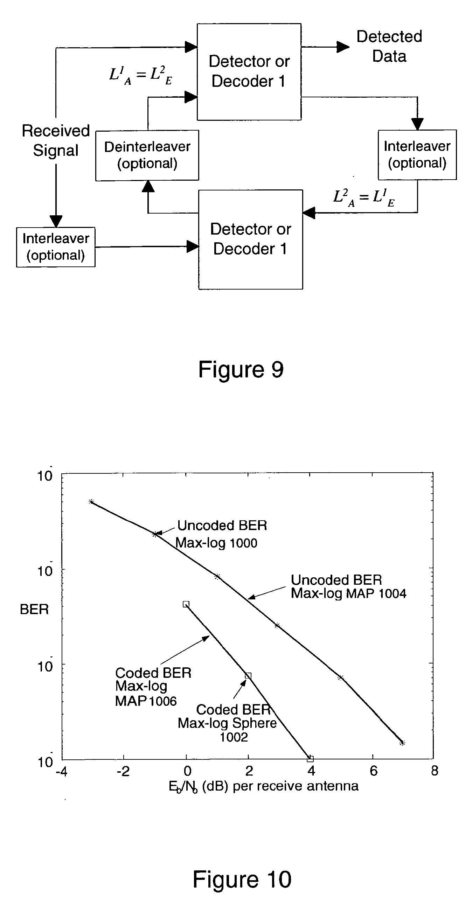

Figure 7 shows a block diagram of a receiver with concatenated channel decoders or detectors, suitable for use with the transmitter of Figure 4. In Figure 7 detector or Decoder 1 may comprise a sphere decoder as described above, and Decoder 2 a conventional channel decoder. Figure 8 shows a block diagram of a variant of the receiver of Figure 7, with concatenated decoders or detectors employing iterative or "turbo" decoding. Figure 9 shows a block diagram of a receiver comprising two instances of Decoder 1, which may comprise, for example, a space-time decoder. In Figure 9 the output of one decoder provides a priori knowledge for the other decoder. In this way the decoder component iteratively exchanges soft information in effect with itself to improve the reliability of the detected data. The received signal is provided to both decoders, optionally (depending upon the interleaving arrangement at the transmitter) interleaved in one case.

Figure 10 shows graphs of bit error rate against signal-to-noise ratio (Eb/No) for a for 4-by-4 8PSK MIMO system transmitting over a block-invariant uncorrelated Rayleigh fading channel. Curves 1000 and 1002 show the performance of a max-log sphere decoder as described above according to an embodiment of the present invention, and curves 1004 and 1006 show the performance of a max-log approximation MAP (*a posteriori probability*) decoder - it can be seen that their performances are substantially the same. Curves 1000 and 1004 relate to an uncoded system, and curves 1002 and 1006 to a system employing a half rate $(5,7)_{oct}$ convolutional code.

The skilled person will appreciate that embodiments of the invention have applications in many types of communication system, including MIMO and multi-user systems. Applications include mobile terminals, access points, and base stations, for example for wireless LANs, as well as applications in mobile phone receiver design and in signal processors. Embodiments of the invention may also potentially find application in non-rf systems, for example a disk drive with multiple read heads and multiple data recording layers in effect acting as multiple transmitters. Embodiments of the invention are particularly useful where non-square symbol constellations or adaptive modulation is employed

In multi-user systems the generator matrix (or equivalently the channel matrix) may represent a combination of spreading and channel effects for the users (see, for example, L. Brunel, "Optimum Multiuser Detection for MC-CDMA Systems Using Sphere Decoding", 12th IEEE International Symposium on Personal, Indoor and Mobile Radio Communications, Volume 1, 30 Sept.-3 Oct. 2001, pages A-16 -A-20 vol.1, hereby incorporated by reference).

In some applications the sphere decoder may be applied as a block equaliser for frequency selective fading. Here, the channel model of may be modified to take into account the channel memory as shown below: $\breve{r} = \breve{s}\breve{H} + \breve{v}$

where

$$\breve{H} = \begin{bmatrix} \mathbf{H}_1 & \mathbf{H}_2 & \cdots & \mathbf{H}_L & & & & \\ & \mathbf{H}_1 & \cdots & \vdots & \ddots & & & \\ & & \ddots & & & \mathbf{H}_L & & \\ & & & \mathbf{H}_1 & & \vdots & \ddots & \\ & & & & \ddots & & \cdots & \mathbf{H}_L \\ & & & & \mathbf{H}_1 & \cdots & \mathbf{H}_{L-1} & \mathbf{H}_L \end{bmatrix},$$

$$\breve{\mathbf{r}} = \begin{bmatrix} r_1 & r_2 & \cdots & r_{T+L-1} \end{bmatrix},$$

$$\breve{\mathbf{s}} = \begin{bmatrix} s_1 & s_2 & \cdots & s_T \end{bmatrix},$$

$$\breve{\mathbf{v}} = \begin{bmatrix} v_1 & v_2 & \cdots & v_{T+L-1} \end{bmatrix},$$

and where $T$ is the length of the symbol block being equalized and $\mathbf{H}_i$, $i = 1, \cdots, L$, is the $i$ th MIMO channel tap. The sphere decoder can then be employed to detect the transmitted block $\breve{\mathbf{s}}$.

Embodiments of the invention can be applied as a channel decoder where the channel encoder can be represented by a linear generator matrix **G**. Examples are block channel codes (see "Digital Communications: Fundamentals and Applications", Bernard Sklar, Prentice Hall International Editions, 1999, 0-13-212713-X) such as Hamming code and Linear Density Parity Check (LDPC) coding where the codeword **x** is generated by the generator matrix **G** from the information bits s through $\mathbf{x} = \mathbf{sG}$, where the vector s contains the information bits. For LDPC code, for example, the generator matrix **G** is derived from the parity check matrix **H** to fulfil the orthogonality requirement $\mathit{GH}^T$ = **0** and any legitimate codeword will satisfy the condition $\mathbf{xH}^T = \mathbf{0}$. Here, the information and codeword blocks, **s** and **x**, respectively, are comprised of binary digits, i.e. 1 and 0, and the matrix operations are in a binary field.

Embodiments of the invention provide the maximum likelihood codeword or the soft output based on Equation 7. In an example implementation, the sphere decoder with input **r** and using **G** as the generator matrix, determines the distance between the received signal **r** and each of the possible transmitted codewords in its search. The codeword with the minimum distance is the maximum likelihood codeword. This employs a translation of the information and codeword blocks from a binary field, {0,1} to signed values {-1, +1}, and arithmetic operations are then used.

No doubt many other effective alternatives will occur to the skilled person. It will be understood that the invention is not limited to the described embodiments and encompasses modifications apparent to those skilled in the art lying within the spirit and scope of the claims appended hereto.

## Claims

1. A sphere decoder configured to search for one or more strings of symbols less than a search bound from an input signal by establishing a value for each symbol in turn of a candidate said string by postulating values for each said symbol in turn of said candidate string and determining whether a said postulated symbol value results in a distance metric dependent upon said search bound being satisfied, each said symbol of a said candidate string for which values are postulated defining a level of said search, the sphere decoder including a data structure configured to define, for each level of said search, a set of symbol values from which said postulated values are selected, said sets of symbol values being different at different levels of said search.

2. A sphere decoder as claimed in Claim 1 wherein said input signal comprises signals coded using a plurality of different modulation schemes, and wherein a said set of symbol values is provided for each different modulation scheme.

3. A sphere decoder as claimed in Claim 2 wherein said input signal comprises signals sent over a plurality of different communication channels employing said plurality of different modulation schemes.

4. A sphere decoder as claimed in Claim 2 or 3 for decoding signals in a multi-user system, wherein said input signal comprises signals received from a plurality of users employing said plurality of modulation schemes, and wherein said one or more strings of symbols comprise symbols transmitted by said plurality of users.

5. A sphere decoder as claimed in Claims 1, 2, 3 or 4 wherein said data structure comprises a plurality of sets of symbol values for at least one level of said search.

6. A sphere decoder as claimed in Claim 5 further configured to select one of said plurality of sets of symbol values for a level of said search dependent upon a previously established value of a said symbol or string of symbols of said candidate string.

7. A sphere decoder as claimed in Claim 6 for decoding signals in a system in which data is encoded onto a plurality of communication channels, wherein said input signal comprises signals received over said plurality of channels.

8. A sphere decoder as claimed in any preceding claim wherein each said symbol is derived from one or more data bits, and wherein one of said sets of symbol values comprises only symbols corresponding to one of said data bits having a selected binary value.

9. A sphere decoder as claimed in any preceding claim wherein said data structure comprises a plurality of tables, one table for each different set of symbol values.

10. A sphere decoder as claimed in Claim 9 wherein symbol values of a said table are ordered according to distance from an initial estimate of a said string of symbols.

11. A sphere decoder as claimed in Claim 10 wherein at least one said table comprises a plurality of repetitions of a set of symbol values each differently ordered and indexable by said initial estimate.

12. A sphere decoder as claimed in any preceding claim for decoding signals sent from a plurality of transmit antennas to a plurality of receive antennas, wherein a said string of symbols is transmitted by said plurality of transmit antennas, and wherein said input signal is derived from signals received by said plurality of receive antennas.

13. A method of decoding an input signal comprising signals received over a plurality of communication channels from a plurality of signal transmitters, said plurality of signal transmitters transmitting a plurality of symbols, said method of decoding searching for one or more strings of symbols representing an estimate of said transmitted symbols, said decoding comprising establishing a value for each symbol in turn of a candidate said string by postulating values for each said symbol in turn of said candidate string and determining whether a said postulated symbol value results in a distance metric dependent upon a search bound being satisfied, said search bound defining a search region dependent upon said input signal, each said symbol of a said candidate string for which values are postulated defining a level of said search, said decoding further comprising defining for each level of said search, a set of symbol values from which said postulated values are selected, said sets of symbol values being different at different levels of said search.

14. Processor control code to, when running, implement the method of Claim 13.

15. A carrier carrying the processor control code of Claim 14.

16. A receiver including the carrier of Claim 15.

17. A decoder for decoding a received signal comprising a string of symbols transmitted over a MIMO channel, the decoder comprising:

a sphere decoder to search for candidate transmitted symbol strings within a radius of said received signal, and to provide a decoded data output; and
a sphere decoder data structure configured to define a plurality of different sets of symbol values for said search, and wherein candidate symbols for symbols of said string are selectable from said different sets of symbol values according to their position in said string.

Figure 1a
(PRIOR ART)

EP 1 545 082 A2

DATA IN

scrambler → convolutional encoder → puncture → interleaving

MUX or space time encoder

**Modulator**

modulation mapping

For OFDM

pilot insertion → IFFT → guard interval insertion → add preamble sequence

To subsequent modulator for multiple antenna system

Interpolate & filter → amplitude limiter → RF Stage

550

Figure 5c

n=4

n=3

n=2

n=1

○ Symbol = -1          ● Symbol = +1

Figure 1b
(PRIOR ART)

$\mathbf{r}, \mathbf{H}, \sigma$

$L_A(\mathbf{x})$

| Maximum Likelihood Hard Detection for $\mathbf{x} \in X_{1,1}^+$ | Maximum Likelihood Hard Detection for $\mathbf{x} \in X_{n,j}^+$ | Maximum Likelihood Hard Detection for $\mathbf{x} \in X_{n_T,q}^+$ |

202a

202b $\qquad d_{1,1,+}^2 \qquad\qquad 202c \qquad d_{n,j,+}^2 \qquad\qquad d_{n_T,q,+}^2$

Parallel or serial processing

| Maximum Likelihood Hard Detection for $\mathbf{x} \in X_{1,1}^-$ | Maximum Likelihood Hard Detection for $\mathbf{x} \in X_{n,j}^-$ | Maximum Likelihood Hard Detection for $\mathbf{x} \in X_{n_T,q}^-$ |

204a          204b          204c

$d_{1,1,-}^2 \qquad\qquad d_{n,j,-}^2 \qquad\qquad d_{n_T,q,-}^2$

206  Max-Log-MAP calculation
(Equation 15)

Soft Output
$L_P(\mathbf{x})$ or $L_E(\mathbf{x})$

200

# Figure 2

Figure 3a

Figure 3b

Figure 4a

Figure 4b

## Figure 5a

Begin SphereDec $\left(F, r, L_A(\mathbf{x}), \sigma^2\right)$

$N :=$ the dimension of lattice
$bestdist := initial\_bestdist$
$n := N$
$dist_n := 0 \qquad newdist := 0$
$\mathbf{e}_n := \mathbf{rF}$
$\mathbf{slist}_n := \text{SortedList}\left(e_{n,n}, NIL\right)$
$step_n := 1$
$s_n := \mathbf{slist}_{n,step_n}$
$step_n := step_n + 1$
$d := \left(e_{n,n} - s_n\right) / f_{n,n}$
$Finish := FALSE$

FALSE ← $Finish$ → TRUE

$newdist := dist_n + d^2 - L\left(s_n, L_A(\mathbf{x}_n), \sigma^2\right)$

return
$\mathbf{s}_{ML}, d_{ML}$

$newdist < \rho^2$ and $exa\min ed\_all == FALSE$
TRUE — FALSE

$n == 1$
FALSE — TRUE

**CASE A**

$e_{n-1,i} := e_{n,i} - df_{n,i}$
$i := 1, \cdots, n-1$
$n := n-1$
$dist_n := newdist$
$\mathbf{slist}_n := \text{SortedList}\left(e_{n,n}, s_n\right)$
$step_n := 1$
$s_n := \mathbf{slist}_{n,step_n}$
$step_n := step_n + 1$
$d := \left(e_{n,n} - s_n\right) / f_{n,n}$

**CASE B**

TRUE — newdist < bestdist — FALSE

$\mathbf{s}_{ML} := \mathbf{s}$
$bestdist := newdist$
$\rho^2 := bestdist$

TRUE — $step_n > M$ — FALSE

$n := n+1$

TRUE — $step_n <= M$ — FALSE

$s_n := \mathbf{slist}_{n,step_n}$
$d := \left(e_{n,n} - s_n\right) / f_{n,n}$

$d_n := 0$

$step_n := step_n + 1$

**CASE C**

FALSE — $n == N$ — TRUE

$n := n+1$

Finish:= TRUE

TRUE — $step_n <= M$ — FALSE

$s_n := \mathbf{slist}_{n,step_n}$
$d := \left(e_{n,n} - s_n\right) / f_{n,n}$

$d_n := 0$

$step_n := step_n + 1$

Figure 5b

Data → Coder 2 → Interleaver (optional) → Coder 1 or Channel → Transmitted Signal

Figure 6

$$L^2_A = L^1_E$$

Received Signal → Detector or Decoder 1 → Deinterleaver (optional) → Decoder 2 → Detected Data

Figure 7

Received Signal → Detector or Decoder 1

$$L^1_A = L^2_E$$

Interleaver (optional)

Deinterleaver (optional)

Decoder 2

$$L^2_A = L^1_E$$

Detected Data

Figure 8

Figure 9

Figure 10